(19) 

Europäisches
Patentamt

European
Patent Office

Office européen
des brevets

(11) **EP 4 183 489 A1**

(12) **EUROPEAN PATENT APPLICATION**
published in accordance with Art. 153(4) EPC

(43) Date of publication:
**24.05.2023 Bulletin 2023/21**

(21) Application number: **21842912.4**

(22) Date of filing: **17.05.2021**

(51) International Patent Classification (IPC):
**B05D 5/06** *(2006.01)* **B05D 7/24** *(2006.01)*
**C09D 5/02** *(2006.01)* **C08K 5/00** *(2006.01)*
**C08K 7/00** *(2006.01)* **C08L 1/02** *(2006.01)*
**C08L 101/00** *(2006.01)* **C09D 101/02** *(2006.01)*
**C09D 201/00** *(2006.01)* **C09D 7/47** *(2018.01)*
**C09D 7/61** *(2018.01)*

(52) Cooperative Patent Classification (CPC):
**B05D 5/06; B05D 7/24; C08K 5/00; C08K 7/00;**
**C08L 1/02; C08L 101/00; C09D 5/02; C09D 7/47;**
**C09D 7/61; C09D 101/02; C09D 201/00**

(86) International application number:
**PCT/JP2021/018557**

(87) International publication number:
**WO 2022/014137 (20.01.2022 Gazette 2022/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.07.2020 JP 2020120993**

(71) Applicant: **Kansai Paint Co., Ltd**
**Amagasaki-shi, Hyogo 661-8555 (JP)**

(72) Inventors:
• **NARITA, Nobuhiko**
**Hiratsuka-shi, Kanagawa 254-8562 (JP)**
• **SAKAI, Kenji**
**Hiratsuka-shi, Kanagawa 254-8562 (JP)**

(74) Representative: **Müller-Boré & Partner**
**Patentanwälte PartG mbB**
**Friedenheimer Brücke 21**
**80639 München (DE)**

(54) **BRIGHT PIGMENT DISPERSION AND METHOD FOR FORMING MULTILAYER COATING FILM**

(57) An effect pigment dispersion containing a wetting agent (A), a flake-effect pigment (B), a sulfonic acid-modified cellulose nanofiber (C), and water (D), the effect pigment dispersion containing a solid content of 0.1 to 10 parts by mass per 100 parts by mass of a total of all components of the effect pigment dispersion.

EP 4 183 489 A1

**Description**

Technical Field

The present invention relates to an effect pigment dispersion and a method for forming a multilayer coating film.

Background Art

The purpose of applying paint is mainly to protect a material and to impart aesthetic appearance. For industrial products, aesthetic appearance, especially "texture", is important from the viewpoint of enhancing the product appeal. Textures of industrial products desired by consumers are diverse, but in recent years, metal-like or pearl-like sheen is in demand in the fields such as automobile outer panels and automobile parts (hereinafter, the metal-like sheen or pearl-like sheen will be collectively described as "metallic or pearly luster").

The metallic or pearly luster is a texture characterized by, like a specular surface, the absence of granularity. Furthermore, the coated plate having such a texture shines brilliantly when viewed in the vicinity of the specularly reflected light (highlight), but presents dark appearance when viewed far from the specularly reflected light where the reflected light intensity is relatively small (shade). That is, there is a large luminance difference between the highlight area and the shade area.

Techniques to impart such metallic or pearly luster to the surface of industrial products include metal plating processing and metal vapor deposition processing (e.g., Patent Literature 1). However, if a paint can provide metallic or pearly luster, it is advantageous from the viewpoints of ease of operation and cost, and if the paint is aqueous, it is further advantageous from the viewpoint of environmental load.

Patent Literature 2 discloses an aqueous base coating composition characterized by containing an effect pigment obtained by grinding a vapor-deposited metal film into metal pieces and an aqueous cellulose derivative with an acid value of 20 to 150 mg KOH/g (solid content), in which the aqueous cellulose derivative is a main binder resin, and a content of the effect pigment is from 20 to 70 mass% in terms of PWC.

However, the coating film formed from the coating described in Patent Literature 2 had insufficient metallic or pearly luster.

On the other hand, Patent Literature 3 discloses an effect pigment dispersion containing water, a flake aluminum pigment, and a cellulose-based rheology control agent, in which the effect pigment dispersion contains from 0.1 to 10 parts by mass of solids based on 100 parts by mass of all components of the effect pigment dispersion, a viscosity measured using a B-type viscometer is in a range of 400 to 10000 mPa·sec under a condition of a rotational speed of 6 revolutions/min, and the solid content of the flake aluminum pigment is 30 to 200 parts by mass based on 100 parts by mass of the total amount of components other than the flake aluminum pigment in the total solids content.

The effect pigment dispersion described in Patent Literature 3 has excellent metallic luster, but in recent years, stability against shear over a long period of time like circulation in automobile lines has further been required.

Citation List

Patent Literature

Patent Literature 1: JP 63-272544 A
Patent Literature 2: JP 2009-155537 A
Patent Literature 3: WO 2017/175468

Summary of Invention

Technical Problem

An object of the present invention is to provide an effect pigment dispersion that can form a coating film with excellent metallic or pearly luster and has stability against shear.

Solution to Problem

The present invention encompasses the subject matter described in the following items.
Item 1. An effect pigment dispersion containing a wetting agent (A), a flake-effect pigment (B), a sulfonic acid-modified cellulose nanofiber (C), and water (D),
the effect pigment dispersion containing a solid content of 0.1 to 10 parts by mass per 100 parts by mass of a total of all components of the effect pigment dispersion.

Item 2. The effect pigment dispersion according to item 1, wherein a content of the wetting agent (A) is in a range of 2 to 30 parts by mass per 100 parts by mass of the solid content in the effect pigment dispersion.

Item 3. The effect pigment dispersion according to item 1 or 2, wherein a content of the flake-effect pigment (B) is in a range of 5 to 85 parts by mass per 100 parts by mass of the solid content in the effect pigment dispersion.

Item 4. The effect pigment dispersion according to any one of items 1 to 3, wherein a content of the sulfonic acid-modified cellulose nanofiber (C) is in a range of 2 to 60 parts by mass per 100 parts by mass of the solid content in the effect pigment dispersion.

Item 5. The effect pigment dispersion according to any one of items 1 to 4, wherein a sulfur content in the sulfonic acid-modified cellulose nanofiber (C) is in a range of 0.42 mmol/g to 3.0 mmol/g.

Item 6. The effect pigment dispersion according to any one of items 1 to 5, wherein a content of the water (D) is in a range of 50 to 95 parts by mass per 100 parts by mass of a total of all components of the effect pigment dispersion.

Item 7. The effect pigment dispersion according to any one of items 1 to 6, further containing an aqueous resin dispersion (E).

Item 8. A method for forming a multilayer coating film, the method including:

(1) applying a colored paint (X) onto an object to be coated to form a colored coating film;
(2) applying the effect pigment dispersion described in any one of items 1 to 7 onto the colored coating film to form an effect coating film;
(3) applying a clear paint (Z) onto the effect coating film to form a clear coating film; and
(4) heating the colored coating film formed in step (1), the effect coating film formed in step (2), and the clear coating film formed in step (3) separately or simultaneously to cure the coating films.

Item 9. The method for forming a multilayer coating film according to item 8, wherein a film thickness of the effect coating film is in a range of 0.025 to 5 $\mu$m.

Advantageous Effects of Invention

An embodiment of the present invention can provide the effect pigment dispersion that can form a coating film with excellent metallic or pearly luster and has stability against shear.

Description of Embodiments

An effect pigment dispersion according to an embodiment of the present invention is an effect pigment dispersion containing a wetting agent (A), a flake-effect pigment (B), a sulfonic acid-modified cellulose nanofiber (C), and water (D), the effect pigment dispersion containing a solid content of 0.1 to 10 parts by mass per 100 parts by mass of a total of all components of the effect pigment dispersion.

Wetting agent (A)

For the wetting agent (A) included in the effect pigment dispersion according to an embodiment of the present invention, there is no particular limitation as long as the agent is effective in helping the effect pigment dispersion be uniformly oriented on an object to be coated when the effect pigment dispersion is applied to the object.

The material having such an effect may be referred to as a moistening agent, a leveling agent, a surface conditioner, a defoamer, a surfactant, a superwetter, or the like in addition to the wetting agent, and the wetting agent also includes a moistening agent, a leveling agent, a surface modifier, a defoamer, a surfactant, and a superwetter.

Examples of the wetting agent (A) include silicone-based, acrylic-based, vinyl-based, fluorine-based, and acetylene diol-based wetting agents. The above wetting agents can each be used alone or in appropriate combination of two or more.

For the wetting agent (A), acetylene diol-based wetting agents and/or wetting agents having an ethylene oxide chain are preferably used, from the viewpoint of providing an effect pigment dispersion that has excellent water resistance, can form metallic or pearly luster, and further has high stability, and a method for forming a multilayer coating film.

In particular, the wetting agent (A) is preferably a wetting agent that is an ethylene oxide adduct of acetylene diol.

Examples of commercially available products of the wetting agent (A) include Dynol series, Surfynol series, and Tego series available from Evonik Industries AG; BYK series available from BYK; Glanol series and Polyflow series available from Kyoeisha Chemical Co., Ltd.; and Disparlon series available from Kusumoto Chemicals, Ltd.

A content of the wetting agent (A) in the effect pigment dispersion according to an embodiment of the present invention is preferably from 2 to 30 parts by mass, more preferably from 2.5 to 25 parts by mass, and even more preferably from 3 to 20 parts by mass in terms of a solid content based on 100 parts by mass of solid content of the effect pigment dispersion from the viewpoint of excellent metallic or pearly luster of the resulting multilayer coating film.

Flake-effect pigment (B)

Examples of the flake-effect pigment (B) in the effect pigment dispersion according to an embodiment of the present invention include vapor-deposited metal flake pigments, aluminum flake pigments, and light interference pigments. One or more types of these pigments can be appropriately selected according to the texture required for the resulting coating film. From the viewpoint of producing a coating film with excellent metallic luster, a vapor-deposited metal flake pigment or an aluminum flake pigment is suitable. On the other hand, from the viewpoint of producing a coating film with excellent pearly luster, a light interference pigment is suitable.

The vapor-deposited metal flake pigment is produced by vapor depositing a metal film onto a base substrate and peeling off the base substrate, and then grinding the vapor-deposited metal film. Examples of the base substrate include films.

The metal material is not particularly limited, but examples include aluminum, gold, silver, copper, brass, titanium, chromium, nickel, nickel-chromium, and stainless steel. Among them, aluminum or chromium is suitable from the viewpoints of availability and ease of handling in particular. In the present specification, a vapor-deposited metal flake pigment produced by vapor deposition of aluminum is referred to as an "vapor-deposited aluminum flake pigment", and a vapor-deposited metal flake pigment produced by vapor deposition of chromium is referred to as a "vapor-deposited chromium flake pigment".

A surface of the vapor-deposited aluminum flake pigment is preferably treated with silica, from the viewpoints of providing storage stability and excellent metallic luster to the coating film.

Examples of commercially available products that can be used as the vapor-deposited aluminum flake pigment include "METALURE" series (trade name, available from ECKART GmbH), "Hydroshine WS" series (trade name, available from ECKART GmbH), "Decomet" series (trade name, available from Schlenk), and "Metasheen" series (trade name, available from BASF).

Examples of commercially available products that can be used as the vapor-deposited chromium flake pigment include "Metalure Liquid Black" series (trade name, available from ECKART GmbH).

An average thickness of the vapor-deposited metal flake pigment is preferably from 0.01 to 1.0 $\mu$m and more preferably from 0.015 to 0.1 $\mu$m.

An average particle size (D50) of the vapor-deposited metal flake pigment is preferably from 1 to 50 $\mu$m and more preferably from 5 to 20 $\mu$m.

The average particle size herein means a median diameter of the volume-based particle size distribution measured by a laser diffraction scattering method using a Microtrac particle size distribution analyzer MT3300 (trade name, available from Nikkiso Co., Ltd.). The thickness is defined as an average of 100 or more measurement values measured by observing cross sections of coating films containing the flake-effect pigment with a microscope and measuring the thicknesses using image processing software.

If the average particle size is greater than the upper limit of 50 $\mu$m, granularity would become apparent in the multilayer coating film. If the particle size is less than the lower limit of 1 $\mu$m, the change in lightness from highlight to shade would become too small. In both cases, the metallic luster may be lacking.

The aluminum flake pigment is generally produced by grinding or milling aluminum in a ball mill or an attritor mill using a grinding aid in the presence of a grinding liquid medium. Examples of the grinding aid used in the production process of the aluminum flake pigment include higher fatty acids, such as oleic acid, stearic acid, isostearic acid, lauric acid, palmitic acid, and myristic acid; as well as aliphatic amines, aliphatic amides, and aliphatic alcohols. Examples of the grinding liquid medium used include aliphatic-based hydrocarbons, such as mineral spirits.

The aluminum flake pigments can be broadly classified into leafing type and non-leafing type aluminum flake pigments according to the type of grinding aid. In the effect pigment dispersion according to an embodiment of the present invention, a non-leafing type flake aluminum pigment is preferred from the viewpoint that the dispersion forms a dense metallic tone coating film with small granularity, excellent water resistance and high glossiness in a highlight. Examples of the non-leafing type flake aluminum pigment that can be used include those whose surface is not particularly treated; as well as those whose surface is coated with a resin; those whose surface is treated with silica; and those whose surface is treated with phosphoric acid, molybdic acid, or a silane coupling agent. A non-leafing type flake aluminum pigment whose surface is treated with one type of surface treatment from the various surface treatments described above can be used, but one treated with a plurality of treatments may be used.

In addition, examples of the aluminum flake pigment that may be used include: colored aluminum pigments, such as those formed by coating the aluminum flake pigment surface with a color pigment and further coating with a resin; and those formed by coating the aluminum flake pigment surface with a metal oxide, such as an iron oxide.

The aluminum flake pigment preferably has an average particle size in a range of 1 to 100 $\mu$m from the viewpoint that the dispersion forms a dense metallic tone coating film with small granularity and high glossiness in a highlight, and the average particle size is more preferably in a range of 5 to 50 $\mu$m and particularly preferably in a range of 7 to 30 $\mu$m. The thickness of the aluminum flake pigment is preferably in a range of 0.01 to 1.0 $\mu$m and particularly preferably in a range of 0.02 to 0.5 $\mu$m.

For the flake-effect pigment (B) in the effect pigment dispersion according to an embodiment of the present invention, the vapor-deposited metal flake pigment and the aluminum flake pigment can be used in combination. In such a case, a blending ratio of the vapor-deposited metal flake pigment and the aluminum flake pigment is from 9/1 to 1/9 and preferably from 2/8 to 8/2 in terms of a mass ratio.

Examples of the light interference pigment that is preferably used include light interference pigments formed by coating a transparent or translucent substrate with a titanium oxide. In the present specification, the transparent substrate refers to a substrate that transmits at least 90% of visible light. The translucent substrate refers to a substrate that transmits at least 10% or more and less than 90% of visible light.

The light interference pigment is an effect pigment formed by coating a surface of a transparent or translucent flake substrate, such as a substrate of mica, artificial mica, glass, an iron oxide, an aluminum oxide, and a metal oxide of any of various types, with a metal oxide having a different refractive index from that of the substrate. Examples of the metal oxide include titanium oxides and iron oxides, and the light interference pigment can exhibit different interference colors depending on different thickness of the metal oxide.

Specific examples of the light interference pigment include metal oxide-coated mica pigments, metal oxide-coated alumina flake pigments, metal oxide-coated glass flake pigments, and metal oxide-coated silica flake pigments shown below.

The metal oxide-coated mica pigment is a pigment in which natural mica or artificial mica serves as a substrate and a metal oxide is coated on the substrate surface. The natural mica is a flake substrate formed by grinding mineral mica. The artificial mica is synthesized by heating industrial materials, such as $SiO_2$, $MgO$, $Al_2O_3$, $K_2SiF_6$, and $Na_2SiF_6$, melting the materials at a high temperature of about 1 500°C, and cooling the materials to undergo the crystallization. The artificial mica contains a smaller amount of impurities and is more uniform in size and thickness in comparison with the natural mica. Specific known examples of the substrate of the artificial mica include fluorophlogopite ($KMg_3AlSi_3O_{10}F_2$), potassium tetrasilicic mica ($KMg_{2.5}AlSi_4O_{10}F_2$), sodium tetrasilicic mica ($NaMg_{2.5}AlSi_4O_{10}F_2$), Na-taeniolite ($NaMg_2LiSi_4O_{10}F_2$), and LiNa-taeniolite ($LiMg_2LiSi_4O_{10}F_2$).

The metal oxide-coated alumina flake pigment is a pigment in which alumina flakes serve as substrates and a metal oxide is coated on the substrate surface. The alumina flakes mean a flake (thin flake) aluminum oxide and are colorless and transparent. The alumina flakes need not consist of aluminum oxide alone and may contain an oxide of another metal.

The metal oxide-coated glass flake pigment is a pigment in which flake glass serves as a substrate and a metal oxide is coated on the substrate surface. The metal oxide-coated glass flake pigment has a smooth substrate surface and thus causes strong light reflection.

The metal oxide-coated silica flake pigment is a pigment in which flake silica, which is a substrate having a smooth surface and uniform thickness, is coated with a metal oxide.

The light interference pigment may be surface-treated to improve dispersibility, water resistance, chemical resistance, weather resistance, or the like.

The light interference pigment with an average particle size in a range of 5 to 30 $\mu$m and particularly of 7 to 20 $\mu$m is preferably used from the viewpoint of providing a coating film with excellent pearly luster.

In addition, the light interference pigment with an average thickness in a range of 0.05 to 1 $\mu$m and particularly of 0.1 to 0.8 $\mu$m is preferably used from the viewpoint of providing a coating film with excellent pearly luster.

The average particle size herein means a median diameter of the volume-based particle size distribution measured by a laser diffraction scattering method using a Microtrac particle size distribution analyzer MT3300 (trade name, available from Nikkiso Co., Ltd.). The thickness is defined as an average of 100 or more measurement values measured by observing cross sections of coating films containing the light interference pigment with a microscope and measuring the thicknesses using image processing software.

The flake-effect pigment (B) in the effect pigment dispersion preferably has an average particle size in a range of 1 to 100 $\mu$m from the viewpoint that the dispersion forms a dense coating film with small granularity, metallic or pearly luster, and high glossiness in a highlight, and more preferably has an average particle size in a range of 5 to 50 $\mu$m and particularly preferably an average particle size in a range of 7 to 30 $\mu$m. The flake-effect pigment (B) preferably has a thickness in a range of 0.01 to 1.0 $\mu$m and particularly preferably a thickness in a range of 0.02 to 0.5 $\mu$m.

A content of the flake-effect pigment (B) in the effect pigment dispersion according to an embodiment of the present invention is preferably from 5 to 85 parts by mass, more preferably from 15 to 80 parts by mass, and even more preferably from 30 to 75 parts by mass based on 100 parts by mass of solid content in the effect pigment dispersion from the viewpoint of providing a coating film with excellent metallic or pearly luster.

Sulfonic acid-modified cellulose nanofiber (C)

In an embodiment of the present invention, the sulfonic acid-modified cellulose nanofiber (C) is produced by micronizing a cellulose raw material, a fiber raw material containing cellulose, such as pulp, to an order of nanometers, and hydroxyl groups (-OH groups) of the cellulose (a chain macromolecule in which D-glucoses are $\beta(1\rightarrow4)$ glycoside-bonded) are at least partially sulfonic acid-modified with sulfo groups represented by Formula (1) below.

$$(-SO_3^-)_r \cdot Z^{r+} \qquad (1)$$

where r is independently a natural number from 1 to 3; and $Z^{r+}$ is at least one selected from the group consisting of a hydrogen ion, an alkali metal cation, an ammonium ion, an aliphatic ammonium ion, and an aromatic ammonium ion when r is 1, an alkaline earth metal cation when r is 2, and a polyvalent metal cation when r is 3. The sulfo group represented by Formula (1) may be a sulfo group where r is 1, a sulfo group where r is 2, a sulfo group where r is 3, or a combination of these.

Raw material

Examples of the cellulose raw material include those originating from plant materials (e.g., wood, bamboo, hemp, jute, kenaf, residual waste in agricultural land, fabric, pulp (such as unbleached softwood kraft pulp (NUKP), bleached softwood kraft pulp (NBKP), unbleached hardwood kraft pulp (LUKP), bleached hardwood kraft pulp (LBKP), unbleached softwood sulfite pulp (NUSP), bleached softwood sulfite pulp (NBSP), thermomechanical pulp (TMP), recycled pulp, and waste paper)), animal materials (e.g., ascidian), algae, microorganisms (e.g., acetic acid bacteria (acetobacter)), or substances produced by microorganisms, and any of these can be used. The cellulose raw material is preferably a plant- or microorganism-derived cellulose raw material and more preferably a plant-derived cellulose raw material.

Content of sulfo groups in sulfonic acid-modified cellulose nanofiber (C)

A content of sulfo groups in the sulfonic acid-modified cellulose nanofiber (C) can be expressed in terms of a sulfur content resulting from the sulfo group, and the content is not particularly limited, but the sulfur content per gram (mass) of the sulfonic acid-modified cellulose nanofiber (C) is preferably from 0.42 mmol/g to 3.0 mmol/g, more preferably from 0.5 mmol/g to 3.0 mmol/g, even more preferably from 0.5 mmol/g to 2.0 mmol/g, and particularly preferably from 0.5 mmol/g to 1.5 mmol/g from the viewpoints of the dispersibility and transparency of the sulfonic acid-modified cellulose nanofiber (C), and the stability of the sulfonic acid-modified cellulose nanofiber (C) in the effect pigment dispersion against shear.
The sulfur content (i.e., the content of the sulfo group) can be measured by a method in accordance with IEC 62321 in which a predetermined amount of the sulfonic acid-modified cellulose nanofiber (C) is combusted and the sulfur content contained in the combusted material is measured using a combustion ion chromatograph.

Average fiber length of sulfonic acid-modified cellulose nanofiber (C)

An average fiber length of the sulfonic acid-modified cellulose nanofiber (C) can be expressed indirectly by the degree of polymerization.
The average fiber length of the sulfonic acid-modified cellulose nanofiber (C) is preferably 280 or higher, more preferably from 300 to 1000, and even more preferably from 300 to 600 in terms of the degree of polymerization.
If the degree of polymerization of the sulfonic acid-modified cellulose nanofiber (C) is lower than 280, a decrease in fiber length would reduce fiber entanglement. On the other hand, if the degree of polymerization of the sulfonic acid-modified cellulose nanofiber (C) is higher than 1000, the dispersibility would decrease, the slurry viscosity would increase too much when the sulfonic acid-modified cellulose nanofiber (C) is made as a slurry, resulting in reduction in the dispersion stability.
The method for measuring the degree of polymerization is not particularly limited, but the degree of polymerization can be measured, for example, by the copper-ethylenediamine method. Specifically, the degree of polymerization of the sulfonic acid-modified cellulose nanofiber (C) can be measured by dissolving the sulfonic acid-modified cellulose nanofiber (C) in a 0.5 M copper-ethylenediamine solution and measuring the viscosity of such a solution by the viscosity method.

Average fiber width of sulfonic acid-modified cellulose nanofiber (C)

An average fiber width of the sulfonic acid-modified cellulose nanofiber (C) is not particularly limited as long as the sulfonic acid-modified cellulose nanofiber (C) has a fiber thickness that readily provides transparency when dispersed in an aqueous solvent, but from the viewpoints of handling properties and transparency of the sulfonic acid-modified cellulose nanofiber (C), the sulfonic acid-modified cellulose nanofiber (C) is prepared to give an average fiber width of preferably 1 nm to 1000 nm, more preferably 2 nm to 100 nm, and even more preferably 2 nm to 20 nm.

The average fiber width can be measured using a known technique. For example, the sulfonic acid-modified cellulose nanofiber (C) is dispersed in a solvent, such as pure water, and the mixed solution is adjusted to a predetermined mass%. This mixed solution is then applied by spin coating onto a silica substrate coated with polyethyleneimine (PEI), and the sulfonic acid-modified cellulose nanofiber (C) on this silica substrate is observed. For the observation method, for example, a scanning probe microscope (i.e., SPM-9700, available from Shimadzu Corporation) can be used. In the resulting observation image, 20 sulfonic acid-modified cellulose nanofibers (C) are randomly selected. Each fiber width is measured and an average of the measurements is calculated. Thus, the average fiber width of the sulfonic acid-modified cellulose nanofiber (C) can be determined.

Method for producing sulfonic acid-modified cellulose nanofiber (C)

The method for producing the sulfonic acid-modified cellulose nanofiber (C) can be produced by a known method. Specifically, the sulfonic acid-modified cellulose nanofiber (C) can be produced, for example, by a chemical treatment process in which a cellulose raw material is chemically treated and a sulfo group is introduced into the cellulose, and a micronization process in which a sulfonic acid-modified pulp fiber yielded in the chemical treatment process is micronized.

The chemical treatment process is a process in which a sulfonating agent having a sulfo group and urea or/and a urea derivative are allowed to act on the cellulose raw material.

The sulfonating agent is any compound having a sulfo group and is not particularly limited, but examples include sulfamic acid, sulfamate salts, and sulfuryl compounds having a sulfonyl group having two oxygen atoms that covalently bond to sulfur.

Among urea or/and the urea derivative described above, the urea derivative is any compound containing urea and is not particularly limited, but examples include carboxylic acid amides, composite compounds of an isocyanate and an amine, and thiamides.

A processing device used in the micronization process is not particularly limited, but examples of the device that can be used include a low-pressure homogenizer, a high-pressure homogenizer, a grinder (stone mill grinder), a ball mill, a cutter mill, a jet mill, a short-screw extruder, a twin-screw extruder, an ultrasonic stirrer, and a household mixer.

A content of the sulfonic acid-modified cellulose nanofiber (C) in the effect pigment dispersion according to an embodiment of the present invention is preferably from 2 to 60 parts by mass, more preferably from 3 to 50 parts by mass, and even more preferably from 5 to 45 parts by mass based on 100 parts by mass of solid content in the effect pigment dispersion from the viewpoints of transparency of the effect pigment dispersion and providing a coating film with excellent stability against shear and excellent metallic or pearly luster.

Effect pigment dispersion

The effect pigment dispersion according to an embodiment of the present invention is an effect pigment dispersion containing a wetting agent (A), a flake-effect pigment (B), a sulfonic acid-modified cellulose nanofiber (C), and water (D), the effect pigment dispersion containing a solid content of 0.1 to 10 parts by mass per 100 parts by mass of a total of all components of the effect pigment dispersion.

The content of water (D) in the effect pigment dispersion according to an embodiment of the present invention is preferably in a range of 50 to 95 parts by mass, more preferably in a range of 65 to 90 parts by mass, and even more preferably in a range of 75 to 90 parts by mass per 100 parts by mass of a total of all components of the effect pigment dispersion from the viewpoint of providing a coating film with excellent metallic or pearly luster.

With the solid content of 0.1 to 10 parts by mass per 100 parts by mass of a total of all components of the effect pigment dispersion, the solid content in the effect pigment dispersion is low, and thus this increases the volume shrinkage after coating and allows a good orientation of the effect material. Thus, the solid content is advantageous in terms of providing a coating film with excellent metallic or pearly luster.

In addition, the solid content of the effect pigment dispersion is preferably in a range of 0.5 to 8 parts by mass and more preferably in a range of 1.5 to 6 parts by mass per 100 parts by mass of a total of all components of the effect pigment dispersion from the viewpoint of providing a coating film with excellent metallic or pearly luster.

The effect pigment dispersion according to an embodiment of the present invention preferably further contains an aqueous resin dispersion (E) from the viewpoint of water resistance and the like of the resulting coating film.

Aqueous resin dispersion (E)

The aqueous resin dispersion (E) is a dispersion in which a resin is dispersed in an aqueous solvent and can contain, for example, at least one selected from the group consisting of aqueous urethane resin dispersions, aqueous acrylic resin dispersions, aqueous polyester resin dispersions, aqueous olefin resin dispersions, and composites of these resins. The aqueous dispersion may be modified.

Among these, from the viewpoint of water resistance of the resulting coating film, an aqueous urethane resin dispersion or an aqueous acrylic resin dispersion is preferred, and furthermore, an aqueous dispersion of hydroxyl group-containing urethane resin and an aqueous dispersion of hydroxyl group-containing acrylic resin are preferred.

The aqueous dispersion of hydroxyl group-containing acrylic resin is particularly preferably a core-shell type.

When the aqueous resin dispersion (E) is used, its content is preferably in a range of 1 to 60 parts by mass and more preferably in a range of 5 to 40 parts by mass based on 100 parts by mass of total solid content in the effect pigment dispersion.

Additional component

The effect pigment dispersion may be further appropriately blended as necessary with an organic solvent, a pigment besides the flake-effect pigment (B), a viscosity modifier besides the sulfonic acid-modified cellulose nanofiber (C), a binder resin besides the aqueous resin dispersion (E), a cross-linking component, a pigment dispersant, an anti-settling agent, an ultraviolet absorber, a light stabilizer, and the like.

Examples of the pigment besides the flake-effect pigment (B) include color pigments and extender pigments. The pigments can be used alone or in combination of two or more types. Examples of the color pigment include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, and diketopyrrolopyrrole-based pigments. Examples of the extender pigment include clay, kaolin, barium sulfate, barium carbonate, calcium carbonate, talc, silica, and alumina white.

Examples of the viscosity modifier that can be used besides the sulfonic acid-modified cellulose nanofiber (C) include cellulose-based viscosity modifiers other than sulfonic acid-modified cellulose nanofibers, polyamide-based viscosity modifiers, mineral-based viscosity modifiers, and poly(acrylic acid)-based viscosity modifiers.

Examples of the polyamide-based viscosity modifier include polyamidoamine salts and fatty acid polyamides.

Examples of the mineral-based viscosity modifier include a swellable layered silicate salt with its crystal structure having a 2:1-type structure. Specific examples include smectite group clay minerals, such as natural or synthetic montmorillonite, saponite, hectorite, stevensite, beidellite, nontronite, bentonite, and laponite; swelling mica group clay minerals and vermiculite, such as Na-type tetrasilicic fluoromica, Li-type tetrasilicic fluoromica, Na salt-type fluorotaeniolite, and Li-type fluorotaeniolite; or substituted products or derivatives of these or mixtures of these.

Examples of the poly(acrylic acid)-based viscosity modifier include sodium poly(sodium acrylate) and poly(acrylic acid-co-(meth)acrylate ester).

Examples of commercially available products of the poly(acrylic acid)-based viscosity modifier include "Primal ASE-60", "Primal TT615", and "Primal RM5" (trade names) available from Dow Chemical Co., Ltd.; and "SN Thickener 613", "SN Thickener 618", "SN Thickener 630", "SN Thickener 634", and "SN Thickener 636" (trade names) available from San Nopco Limited. Examples of the poly(acrylic acid)-based viscosity modifier that can be used include those with a solid content acid value in a range of 30 to 300 mg KOH/g and preferably 80 to 280 mg KOH/g.

When an additional viscosity modifier is used, the content is preferably in a range of 1 to 200 parts by mass and more preferably in a range of 50 to 150 parts by mass in terms of solid content based on 100 parts by mass of the solid content of the sulfonic acid-modified cellulose nanofiber (C).

The cross-linking component is a component for cross-linking and curing the aqueous resin dispersion (E) by heating when the effect pigment dispersion contains the aqueous resin dispersion (E). When the effect pigment dispersion does not contain the aqueous resin dispersion (E), the cross-linking component may be a self-crosslinking component or may be a component for cross-linking and curing a portion of a colored paint for forming a colored coating film described later or a portion of a clear paint for forming a clear coating film described later. Examples of the cross-linking component include amino resins, urea resins, polyisocyanate compounds, blocked polyisocyanate compounds, polyisocyanate compounds blocked with an active methylene compound, epoxy group-containing compounds, carboxyl group-containing compounds, carbodiimide group-containing compounds, hydrazide group-containing compounds, semicarbazide group-containing compounds, and silane coupling agents. Among these, the cross-linking component is preferably an amino resin, a polyisocyanate compound and a blocked polyisocyanate compound that are reactive with a hydroxyl group, or a carbodiimide group-containing compound that is reactive with a carboxyl group. Examples of the polyisocyanate compound and the blocked polyisocyanate compound that can be used include those described in the section on a clear paint described later. The cross-linking components can be used alone or in combination of two or more types.

When the effect pigment dispersion according to an embodiment of the present invention contains the cross-linking component, the content of the cross-linking component is preferably in a range of 1 to 100 parts by mass, more preferably in a range of 5 to 95 parts by mass, and even more preferably in a range of 10 to 90 parts by mass in terms of solid content based on 100 parts by mass of the content of the flake-effect pigment (B) in the effect pigment dispersion according to an embodiment of the present invention, from the viewpoint of water resistance and the like of the resulting coating film.

When the effect pigment dispersion according to an embodiment of the present invention contains the binder resin (including the aqueous resin dispersion (E) and a binder resin other than the aqueous resin dispersion (E)) and/or the cross-linking component, a total content of the binder resin and the cross-linking component is preferably in a range of 0.1 to 500 parts by mass, more preferably in a range of 1 to 300 parts by mass, and even more preferably in a range of 10 to 100 parts by mass in terms of solid content based on 100 parts by mass of the solid content of the flake-effect pigment (B) in the effect pigment dispersion, from the viewpoints of the metallic or pearly luster and waterproof adhesion of the resulting coating film.

Viscosity

The effect pigment dispersion according to an embodiment of the present invention suitably has a viscosity in a range of 100 to 10000 mPa·sec, preferably 200 to 8000 mPa·sec, and more preferably 300 to 6000 mPa·sec under a condition of a rotational speed of 6 revolutions/min (6 rpm), from the viewpoint of the metallic or pearly luster of the resulting coating film.

The viscosity is defined as a viscosity at one minute after the start of the measurement under constant conditions. Specifically, the prepared effect pigment dispersion is placed in a predetermined container and stirred and mixed until it becomes uniform, using a rotary stirrer with a rotational speed set to a condition of 1000 revolutions/min. The measurement is then started with a B-type viscometer at a temperature of 20°C under a condition of 6 rpm, and the viscosity is defined as a viscosity at one minute after the start (also referred to as a "B6 value" in the present specification). The viscometer used at this time is "LVDV-1" (trade name, available from BROOKFIELD, a B-type viscometer). The rotational speed of 6 rpm is a typical condition for controlling the viscosity of a liquid with pseudoplastic.

Method for forming multilayer coating film

A method for forming a multilayer coating film according to an embodiment of the present invention is a method for forming a multilayer coating film, the method including:

(1) applying a colored paint (X) onto an object to be coated to form a colored coating film;
(2) applying the effect pigment dispersion according to an embodiment of the present invention onto the colored coating film to form an effect coating film;
(3) applying a clear paint (Z) onto the effect coating film to form a clear coating film; and
(4) heating the colored coating film formed in step (1), the effect coating film formed in step (2), and the clear coating film formed in step (3) separately or simultaneously to cure the coating films.

In addition, a base coating film made from a base paint (W) that may be transparent may be formed between the colored coating film and the effect coating film.

Object to be coated

The multilayer coating film according to an embodiment of the present invention is formed on an object to be coated described below.

Examples of the object to be coated include metals, such as iron, zinc, and aluminum, and metal materials, such as alloys containing these, and molded products made of a metal of these; and molded products made of glass, plastic, foam, or the like; and films. These materials are appropriately degreased or surface-treated according to the materials and can be used as the object to be coated. Examples of the surface treatment include phosphate salt treatment, chromate treatment, and complex oxide treatment, and the like. Furthermore, when the material of the object to be coated is a metal, an undercoating film is preferably formed from a cationic electrodeposition paint or the like on the surface-treated metal material. In addition, when the material of the object to be coated is plastic, a primer coating film is preferably formed from a primer paint on the degreased plastic material.

Colored paint (X)

Specific examples of the colored paint (X) that can be used include a thermosetting paint known per se containing a base resin, a cross-linker, a pigment, and a solvent, such as an organic solvent and/or water, as main components. Examples of the thermosetting paint include an intermediate paint and a base paint.

Examples of the base resin used in the colored paint (X) include thermosetting resins and normal temperature curable resins, but the base resin is desirably a thermosetting resin from the viewpoints of water resistance, chemical resistance, and weather resistance.

The base resin is suitably a resin with good weather resistance, transparency, and the like, and specific examples include acrylic resins, polyester resins, epoxy resins, and urethane resins.

Examples of the acrylic resin include resins formed by copolymerization of: a (meth)acrylic ester having a functional group, such as an $\alpha,\beta$-ethylenically unsaturated carboxylic acid, a hydroxyl group, an amide group, a methylol group, or an epoxy group; and another (meth)acrylic ester; styrene; or the like.

Examples of the polyester resin include polyester resins obtained by condensation reaction of a polyhydric alcohol, such as ethylene glycol, propylene glycol, butylene glycol, 1,6-hexanediol, trimethylolpropane, or pentaerythritol, with a polyvalent carboxylic acid component, such as adipic acid, isophthalic acid, terephthalic acid, phthalic anhydride, hexahydrophthalic anhydride, or trimellitic anhydride.

Examples of the epoxy resin include what is called bisphenol A-type epoxy resins produced by condensation reaction of bisphenol A with epichlorohydrin.

Examples of the urethane resin include compounds formed by addition reaction of a diisocyanate compound and a polyhydric alcohol; and high molecular weight urethane resins formed by reaction of the acrylic resin, polyester resin, or epoxy resin described above with a diisocyanate compound.

The colored paint (X) may be either an aqueous paint or a solvent-based paint but is desirably an aqueous paint from the viewpoint of reducing VOCs in the paint. When the colored paint (X) is an aqueous paint, the base resin can be made water-soluble or water-dispersible by the use of a resin containing hydrophilic groups in a sufficient amount to make the resin water-soluble or water-dispersible and neutralization of the hydrophilic group to form an alkali salt, the hydrophilic groups being, for example, carboxyl groups, hydroxyl groups, methylol groups, amino groups, sulfonate groups, or polyoxyethylene linkages, and most commonly carboxyl groups. In such a case, an amount of hydrophilic groups, for example, carboxyl groups, is not particularly limited and can be freely selected according to a degree of resulting water-solubility or water-dispersibility of the base resin, but can typically be about 10 mg KOH/g or greater and preferably in a range of 30 to 200 mg KOH/g based on the acid value. In addition, examples of the alkaline material used in the neutralization include sodium hydroxide and amine compounds.

Furthermore, the resin can also be made water-dispersible by emulsion polymerization of a polymerizable component in the presence of a surfactant or a water-soluble resin. Moreover, the resin is also made water-dispersible by dispersing the resin in water in the presence of, for example, an emulsifier. In this procedure of making the base resin water-dispersible, the base resin may contain no hydrophilic groups at all or can contain fewer hydrophilic groups than the water-soluble resin.

The cross-linker is a material for cross-linking and curing the base resin by heating, and examples include components exemplified as the cross-linking component in the above section of the effect pigment dispersion according to an embodiment of the present invention.

A ratio of each of the components in the colored paint (X) can be freely selected as necessary, but from the viewpoints of water resistance and finished quality, typically, the ratio of the base resin is preferably in a range of 60 to 90 mass% and particularly of 70 to 85 mass%, and a ratio of the cross-linker is preferably in a range of 10 to 40 mass% and particularly of 15 to 30 mass% based on a total mass of the both components.

The pigment provides color and undercoat hiding power to the colored coating film formed from the colored paint (X). The type or blending amount of the pigment can be appropriately adjusted according to the hue or lightness desired for the multilayer coating film. For example, by adjusting the type or blending amount of the pigment, the lightness L* value of the coating film formed from the colored paint (X) can be adjusted in a range of 0.1 to 90, preferably 0.1 to 70, and more preferably 0.1 to 60. Examples of the pigment include metallic pigments, antirust pigments, color pigments, and extender pigments. Among others, a color pigment is preferably used, and from the viewpoint of formation of a coating film with excellent undercoat hiding power and metallic or pearly luster, a black pigment is more preferably used. The type or blending amount of the pigment in the colored paint (X) is preferably adjusted to give L* of the colored coating film in the range described above.

A cured film thickness of the colored coating film formed from the colored paint (X) is preferably from 3 $\mu$m to 50 $\mu$m, more preferably from 5 to 45 $\mu$m, and even more preferably from 8 to 40 $\mu$m from the viewpoint of undercoat hiding power and metallic or pearly luster of the multilayer coating film. For example, the cured film thickness can be from 15 $\mu$m to 50 $\mu$m, preferably from 18 to 45 $\mu$m, and more preferably from 20 to 40 $\mu$m.

The colored paint (X) can be applied according to a common method. When the colored paint (X) is an aqueous paint, for example, deionized water, and as necessary an additive, such as a thickener or a defoamer, are added to the colored paint (X) to adjust the solid content to approximately 30 to 70 mass% and the viscosity to from 500 to 6000 cps/6 rpm (B-type viscometer). Then, the colored paint (X) can be applied to the surface of the object to be coated by spray coating, rotary atomization coating, or the like. During the application of the colored paint (X), an electrostatic voltage can also be applied as necessary.

The colored paint (X) has a monochrome hiding film thickness of preferably 80 $\mu$m or less, more preferably 10 to 60 $\mu$m, and even more preferably 15 to 50 $\mu$m from the viewpoint of color stability or the like. In the present specification, the "monochrome hiding film thickness" is a value measured by the following procedure: a monochrome checkered pattern, hiding chart specified in 4.1.2 of JIS K 5600-4-1 is pasted on a steel sheet, then the paint is applied by inclined coating onto the hiding chart to give a continuously varying film thickness, dried or cured, then the coated surface is visually observed under diffused daylight, and the minimum film thickness in which the monochrome border of the checkered pattern of the hiding chart disappears is measured by an electromagnetic film thickness gauge.

When the effect pigment dispersion according to an embodiment of the present invention or a base paint (W) that may be transparent is applied onto an uncured colored coating film made from the colored paint (X), after application of the colored paint (X), the colored paint (X) is allowed to stand at normal temperature for 15 to 30 minutes or heated at a temperature of 50 to 100°C for 30 seconds to 10 minutes, and then the effect pigment dispersion according to an embodiment of the present invention or the base paint (W) that may be transparent can be applied.

in addition, when the colored coating film is cured, the heating temperature is in a range of preferably 110 to 180°C and particularly preferably 120 to 160°C. Furthermore, the time of the heat treatment is in a range of preferably 10 to 60 minutes and particularly preferably 15 to 40 minutes.

Base paint (W) that may be transparent

Examples of the paint that can be used as the base paint (W) that may be transparent (which may be hereinafter referred to simply as the "base paint (W)") include paint compositions known per se. In particular, a paint composition commonly used in coating an automobile body or the like is suitably used as the base paint (W).

The base paint (W) is preferably a paint containing a base resin and a curing agent, and a medium including water and/or an organic solvent.

Examples of the base resin and the curing agent that can be used include known compounds commonly used in the art.

The base resin is suitably a resin with good weather resistance, transparency, and the like, and specific examples include acrylic resins, polyester resins, epoxy resins, and urethane resins.

Examples of the acrylic resin include resins formed by copolymerization of monomer components including a (meth)acrylic ester having a functional group, such as an $\alpha,\beta$-ethylenically unsaturated carboxylic acid, a hydroxyl group, an amide group, or a methylol group; other (meth)acrylic esters; and styrene.

Examples of the polyester resin include those formed by condensation reaction of a polybasic acid, a polyhydric alcohol, and a modified oil according to a common method.

Examples of the epoxy resin include epoxy resins produced by a method in which an epoxy ester is synthesized by reaction of an epoxy group and an unsaturated fatty acid, and an $\alpha,\beta$-unsaturated acid is added to the unsaturated group; and epoxy resins produced by a method in which a hydroxyl group of an epoxy ester and a polybasic acid, such as phthalic acid and trimellitic acid, are esterified.

Examples of the urethane resin include urethane resins formed by reacting at least one type of diisocyanate compound selected from the group consisting of aliphatic diisocyanate compounds, alicyclic diisocyanate compounds, and aromatic diisocyanate compounds with at least one type of polyol compound selected from the group consisting of polyether polyols, polyester polyols, and polycarbonate polyols; and high molecular weight urethane resins produced by reacting the acrylic resin, polyester resin, or epoxy resin described above with a dipolyisocyanate compound.

The base paint (W) may be either an aqueous paint or a solvent-based paint but is desirably an aqueous paint from the viewpoint of reducing VOCs in the paint. When the base paint (W) is an aqueous paint, the base resin can be made water-soluble or water-dispersible by using a resin containing hydrophilic groups in a sufficient amount to make the resin water-soluble or water-dispersible and neutralizing the hydrophilic groups to form an alkali salt; examples of the hydrophilic groups include carboxyl groups, hydroxyl groups, methylol groups, amino groups, sulfonate groups, or polyoxyethylene groups, most preferably carboxyl groups. In such a case, an amount of hydrophilic groups, for example, carboxyl groups, is not particularly limited and can be freely selected according to a degree of resulting water-solubility or water-dispersibility of the base resin, but can typically be about 10 mg KOH/g or higher and preferably in a range of 30 to 200 mg KOH/g based on the acid value. In addition, examples of the alkaline material used in the neutralization include sodium hydroxide and amine compounds.

Furthermore, the resin can also be made water-dispersible by emulsion polymerization of a monomer component in the presence of a surfactant and optionally a water-soluble resin. Moreover, the resin is also made water-dispersible by dispersing the resin in water in the presence of, for example, an emulsifier. In this procedure of making the base resin water-dispersible, the base resin may contain no hydrophilic groups at all or can contain fewer hydrophilic groups than the water-soluble resin.

The curing agent is an agent for cross-linking and curing the base resin by heating, and examples include amino resins, polyisocyanate compounds (including unblocked polyisocyanate compounds and blocked polyisocyanate compounds), epoxy group-containing compounds, carboxyl group-containing compounds, carbodiimide group-containing compounds, hydrazide group-containing compounds, and semicarbazide group-containing compounds. Among these, the curing agent is preferably an amino resin and a polyisocyanate compound which can react with a hydroxyl group, and a carbodiimide group-containing compound that can react with a carboxyl group. The cross-linkers can be used alone or in combination of two or more types.

Specifically, an amino resin produced by condensation or co-condensation of melamine, benzoguanamine, urea, or the like with formaldehyde, or a further conversion, such as etherification with a lower monohydric alcohol, is suitably used. In addition, a polyisocyanate compound can also be suitably used.

A ratio of each of the components in the base paint (W) can be freely selected as necessary, but from the viewpoint of water resistance and finished quality, typically, the ratio of the base resin is preferably in a range of 50 to 90 mass% and particularly of 60 to 85 mass%, and the ratio of the cross-linker is preferably in a range of 10 to 50 mass% and particularly of 15 to 40 mass% based on a total mass of the both components.

For the base paint (W), an organic solvent can also be used as necessary. Specifically, an organic solvent commonly used in coatings can be used. Examples of the organic solvent include hydrocarbons, such as toluene, xylene, hexane, and heptane; esters, such as ethyl acetate, butyl acetate, ethylene glycol monomethyl ether acetate, diethylene glycol monoethyl ether acetate, and diethylene glycol monobutyl acetate; ethers, such as ethylene glycol monomethyl ether, ethylene glycol diethyl ether, diethylene glycol monomethyl ether, and diethylene glycol dibutyl ether; alcohols, such as butanol, propanol, octanol, cyclohexanol, and diethylene glycol; and ketones, such as methyl ethyl ketone, methyl isobutyl ketone, cyclohexanone, and isophorone. These can be used alone or in combination of two or more types.

In addition to the components described above, the base paint (W) may appropriately contain, if desired, a color pigment, an extender pigment, an effect pigment, an ultraviolet absorber, a defoamer, a viscosity modifier, a basic compound, a rust inhibitor, a surface conditioner, or the like.

The base paint (W) may be a transparent paint or a colored paint but is preferably a transparent paint from the viewpoint of formation of a coating film with excellent metallic or pearly luster.

The base paint (W) being a transparent paint means that a dry film with a film thickness of 35 $\mu$m formed by applying the base paint (W) has a haze value of 25% or less. In an embodiment of the present invention, the haze value is defined as follows: a coating film is formed by applying the base paint to a smooth PTFE plate, curing, and peeling the paint; the coating film is measured for diffuse light transmittance (DF) and parallel light transmittance (PT) by a turbidimeter COH-300A (trade name, available from Nippon Denshoku Industries Co., Ltd.); and a value calculated by Equation (2) below is defined as the haze value.

$$\text{Haze value} = 100 * \text{DF}/(\text{DF} + \text{PT}) \cdots (2)$$

When the base paint (W) is a transparent paint, it can contain an extender pigment as necessary. Examples of the extender pigment include barium sulfate, barium carbonate, calcium carbonate, aluminum silicate, silica, magnesium carbonate, talc, and alumina white.

When the extender pigment is blended in the base paint (W), a blending amount of the extender pigment is preferably in a range of 0.1 to 30 parts by mass and more preferably in a range of 0.1 to 20 parts by mass per 100 parts by mass of resin solid content in the base paint (W).

When the base paint (W) is a colored paint, it contains a color pigment. The base paint (W) can contain a color pigment, such as titanium oxide and carbon black, from the viewpoint of light transmission control. The base paint (W) can further contain as necessary a color pigment known in the art other than titanium oxide and carbon black. Such a color pigment is not particularly limited, but specific examples include composite metal oxide pigments, such as iron oxide pigments and titanium yellow; azo-based pigments, quinacridone-based pigments, diketopyrrolopyrrole-based pigments, perylene-based pigments, perinone-based pigments, benzimidazolone-based pigments, isoindoline-based pigments, isoindolinone-based pigments, metal chelate azo-based pigments, phthalocyanine-based pigments, indanthrone-based pigments, dioxane-based pigments, threne-based pigments, indigo-based pigments, and effect pigments, and any one from these or more in combination can be used. Examples of the effect pigment include those exemplified in the section of the flake-effect pigment.

When the color pigment is blended, a blending amount of the color pigment is preferably in a range of 0.1 to 50 parts by mass and more preferably in a range of 0.2 to 40 parts by mass per 100 parts by mass of resin solid content in the base paint (W).

The cured film thickness of the base coating film formed from the base paint (W) is preferably 3 μm or greater, more preferably from 3 to 20 μm, and even more preferably from 5 to 15 μm from the viewpoint of smoothness and metallic sheen.

The base paint (W) can be applied according to a common method, for example, air spray coating, airless spray coating, and rotary atomization coating. When the base paint (W) is applied, an electrostatic voltage may be applied as necessary, and among others, electrostatic coating by rotary atomization and electrostatic coating by air spraying are preferred, and electrostatic coating by rotary atomization is particularly preferred.

In addition, when the base paint (W) is applied by air spray coating, airless spray coating, or rotary atomization coating, the base paint (W) preferably appropriately contains water and/or an organic solvent as well as an additive, such as a viscosity modifier or a defoamer, as necessary to adjust the solid content and viscosity to be suitable for coating.

The solid content of the base paint (W) is preferably in a range of 10 to 60 mass%, preferably of 15 to 55 mass%, and more preferably of 20 to 50 mass%. The viscosity of the base paint (W) at 20°C and 6 rpm measured by a B-type viscometer is in a range preferably of 200 to 7000 cps, more preferably of 300 to 6000 cps, and even more preferably of 500 to 5000 cps.

When the effect pigment dispersion according to an embodiment of the present invention is applied onto an uncured base coating film formed from the base paint (W), after application of the base paint (W), the base paint (W) is allowed to stand at normal temperature for 15 to 30 minutes or heated at a temperature of 50 to 100°C for 30 seconds to 10 minutes, and then the effect pigment dispersion (Y) according to an embodiment of the present invention can be applied.

In addition, when the base coating film is cured, the heating temperature is in a range of preferably 110 to 180°C and particularly preferably 120 to 160°C. Furthermore, the time of the heat treatment is in a range of preferably 10 to 60 minutes and particularly preferably 15 to 40 minutes.

Application of effect pigment dispersion

The effect pigment dispersion according to an embodiment of the present invention can be applied by a method, such as electrostatic coating, air spraying, or airless spraying. In these coating methods, an electrostatic voltage may be applied as necessary. In the method for forming a multilayer coating film according to an embodiment of the present invention, electrostatic coating by a rotary atomization method is particularly preferred.

A film thickness 30 seconds after application of the effect pigment dispersion (Y) according to an embodiment of the present invention on an object to be coated is preferably from 3 to 25 μm, more preferably from 4 to 24 μm, and even more preferably from 5 to 23 μm from the viewpoint of formation of a coating film with excellent metallic or pearly luster.

A dry film thickness of the effect coating film is preferably from 0.025 to 5 μm and more preferably from 0.15 to 3 μm.

In addition, after application of the effect pigment dispersion (Y), the effect pigment dispersion (Y) is allowed to stand at normal temperature for 15 to 30 minutes or heated at a temperature of 50 to 100°C for 30 seconds to 10 minutes, and then a clear paint (Z) can be applied.

Clear paint (Z)

Examples of the clear paint (Z) that can be used include any of known thermosetting clear coating compositions. Examples of the thermosetting clear coating composition include: organic solvent-type thermosetting coating compositions containing a base resin having a cross-linking functional group and a curing agent; aqueous thermosetting coating compositions; and powder thermosetting coating compositions.

Examples of the cross-linking functional group contained in the base resin include a carboxyl group, a hydroxyl group, an epoxy group, and a silanol group. Examples of the type of base resin include acrylic resins, polyester resins, alkyd resins, urethane resins, epoxy resins, and fluororesins. Examples of the curing agent include polyisocyanate compounds, blocked polyisocyanate compounds, melamine resins, urea resins, carboxyl group-containing compounds, carboxyl group-containing resins, epoxy group-containing resins, and epoxy group-containing compounds.

The combination of the base resin/curing agent of the clear paint (Z) is preferably a carboxyl group-containing resin/epoxy group-containing resin, a hydroxyl group-containing resin/polyisocyanate compound, a hydroxyl group-containing resin/blocked polyisocyanate compound, a hydroxyl group-containing resin/melamine resin, or the like.

In addition, the clear paint (Z) may be a one-component paint or a multi-component paint, such as a two-component paint.

Among these, the clear paint (Z) is preferably a two-component clear paint containing a hydroxyl group-containing resin and a polyisocyanate compound described below from the viewpoint of adherence of the resulting coating film.

Hydroxyl group-containing resin

Examples of the hydroxyl group-containing resin that can be used without limitation include any resin containing a hydroxyl group known in the art. Examples of the hydroxyl group-containing resin include hydroxyl group-containing acrylic resins, hydroxyl group-containing polyester resins, hydroxyl group-containing polyether resins, and hydroxyl group-containing polyurethane resins, preferred examples include hydroxyl group-containing acrylic resins and hydroxyl group-containing polyester resins, and particularly preferred examples include hydroxyl group-containing acrylic resins.

A hydroxyl value of the hydroxyl group-containing acrylic resin is preferably in a range of 80 to 200 mg KOH/g and more preferably in a range of 100 to 180 mg KOH/g from the viewpoints of scratch resistance and water resistance of the coating film.

A weight average molecular weight of the hydroxyl group-containing acrylic resin is preferably in a range of 2500 to 40000 and more preferably in a range of 5000 to 30000 from the viewpoints of acid resistance and smoothness of the coating film.

In the present specification, the weight average molecular weight is a value calculated from a chromatogram measured by a gel permeation chromatograph calibrated with the molecular weight of standard polystyrene. For the gel permeation chromatograph, "HLC8120 GPC" (available from Tosoh Corporation) was used. Gel permeation chromatography was performed using four columns "TSKgel G-4000HXL", "TSKgel G-3000HXL", "TSKgel G-2500HXL", and "TSKgel G-2000HXL" (trade names, all available from Tosoh Corporation) under conditions of a mobile phase of tetrahydrofuran, a measurement temperature of 40°C, a flow rate of 1 cc/min, and a detector of RI.

A glass transition temperature of the hydroxyl group-containing acrylic resin is preferably from -40°C to 20°C and particularly preferably in a range of -30°C to 10°C. The hydroxyl group-containing acrylic resin having a glass transition temperature of -40°C or higher provides the coating film with sufficient hardness, and the hydroxyl group-containing acrylic resin having a glass transition temperature of 20°C or lower can maintain the coated surface smoothness of the coating film.

Polyisocyanate compound

The polyisocyanate compound is a compound having at least two isocyanate groups per molecule, and examples include aliphatic polyisocyanates, alicyclic polyisocyanates, aromatic-aliphatic polyisocyanates, aromatic polyisocyanates, and derivatives of the polyisocyanates.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or its mixture, methylenebis(4,1-cyclohexanediyl) diisocyanate (common name: hydrogenated MDI), and norbornane diisocyanate; and alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the aromatic-aliphatic polyisocyanates include aromatic-aliphatic diisocyanates, such as methylenebis(4,1-phenylene) diisocyanate (common name: MDI), 1,3- or 1,4-xylylene diisocyanate or its mixture, ω,ω'-diisocyanato-1,4-diethylbenzene, and 1,3- or 1,4-bis(1-isocyanato-1-methylethyl)benzene (common name: tetramethylxylylene diisocyanate) or its mixture; and aromatic-aliphatic triisocyanates, such as 1,3,5-triisocyanatomethylbenzene.

Examples of the aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or its mixture, 4,4'-toluidine diisocyanate, and 4,4'-diphenyl ether diisocyanate; aromatic triisocyanates, such as triphenylmethane-4,4',4"-triisocyanate, 1,3,5-triisocyanatobenzene, and 2,4,6-triisocyanatotoluene; and aromatic tetraisocyanates, such as 4,4'-diphenylmethane-2.2',5,5'-tetraisocyanate.

In addition, examples of the derivatives of the polyisocyanates include dimers, trimers, biuret, allophanate, uretdione, uretoimine, isocyanurates, oxadiazinetrione, and polymethylene polyphenyl polyisocyanates (crude MDI and polymeric MDI), and crude TDI of the polyisocyanates described above. The derivatives of the polyisocyanates may be used alone or in combination of two or more types.

The polyisocyanates and their derivatives may each be used alone or in combination of two or more types.

Examples that can be suitably used include hexamethylene diisocyanate-based compounds among the aliphatic diisocyanates and 4,4'-methylenebis(cyclohexyl isocyanate) among the alicyclic diisocyanates. Among these, a derivative of hexamethylene diisocyanate is optimal from the viewpoint of adherence and compatibility.

In addition, examples of the polyisocyanate compound that may be used include prepolymers formed by reacting the polyisocyanate or its derivative described above with a compound having an active hydrogen group, such as a hydroxyl group or an amino group, which can react with the polyisocyanate, under conditions of excess isocyanate groups. Examples of the compound that can react with the polyisocyanate include polyhydric alcohols, low molecular weight polyester resins, amines, and water.

In addition, examples of the polyisocyanate compound also include blocked polyisocyanate compounds, which are compounds formed by blocking an isocyanate group in the polyisocyanate and its derivative with a blocking agent.

Examples of the blocking agent include phenolic compounds, such as phenol, cresol, xylenol, nitrophenol, ethylphenol, hydroxydiphenyl, butylphenol, isopropylphenol, nonylphenol, octylphenol, and methyl hydroxybenzoate; lactam-based compounds, such as ε-caprolactam, δ-valerolactam, γ-butyrolactam, and β-propiolactam; aliphatic alcohol-based compounds, such as methanol, ethanol, propyl alcohol, butyl alcohol, amyl alcohol, and lauryl alcohol; ether-based compounds, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based compounds, such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based compounds, such as formamide oxime, acetoamide oxime, acetoxime, methyl ethyl ketoxime, diacetyl monoxime, benzophenone oxime, and cyclohexane oxime; active methylene-based compounds, such as dimethyl malonate, diethyl malonate, ethyl acetoacetate, methyl acetoacetate, and acetylacetone; mercaptan-based compounds, such as butyl mercaptan, t-butyl mercaptan, hexyl mercaptan, t-dodecyl mercaptan, 2-mercaptobenzothiazole, thiophenol, methylthiophenol, and ethylthiophenol; acid amide-based compounds, such as acetanilide, acetanisidide, acetotoluide, acrylamide, methacrylamide, acetic amide, stearic amide, and benzamide; imide-based compounds, such as succinimide, phthalimide, and maleimide; amine-based compounds, such as diphenylamine, phenylnaphthylamine, xylidine, N-phenylxylidine, carbazole, aniline, naphthylamine, butylamine, dibutylamine, and butylphenylamine; imidazole-based compounds, such as imidazole and 2-ethylimidazole; urea-based compounds, such as urea, thiourea, ethyleneurea, ethylenethiourea, and diphenylurea; carbamic ester-based compounds, such as phenyl N-phenylcarbamate; imine-based compounds, such as ethyleneimine and propyleneimine; sulfite-based compounds, such as sodium bisulfite and potassium bisulfite; and azole-based compounds. Examples of the azole-based compounds include pyrazole or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives, such as imidazole, benzimidazole, 2-methylimidazole, 2-ethylimidazole, and 2-phenylimidazole; and imidazoline derivatives, such as 2-methylimidazoline and 2-phenylimidazoline.

When the polyisocyanate compound is blocked (the polyisocyanate compound is reacted with a blocking agent), a solvent can be added as necessary to perform blocking. The solvent used in the blocking reaction is preferably a solvent not reactive with an isocyanate group, and examples include ketones, such as acetone and methyl ethyl ketone; esters, such as ethyl acetate; and a solvent such as N-methyl-2-pyrrolidone (NMP).

The polyisocyanate compounds can each be used alone or in combination of two or more types.

In an embodiment of the present invention, from the viewpoint of curability and scratch resistance of the coating film, an equivalent ratio of hydroxyl groups of the hydroxyl group-containing resin to isocyanate groups of the polyisocyanate compound (OH/NCO) is preferably in a range of 0.5 to 2.0 and more preferably 0.8 to 1.5.

When a two-component clear paint containing a hydroxyl group-containing resin and a polyisocyanate compound is used as the clear paint (Z), the hydroxyl group-containing resin and the polyisocyanate compound are preferably separated from each other from the viewpoint of storage stability, and these two parts are mixed and adjusted immediately before use.

One-component paint may be used as the clear paint (Z). Examples of the combination of the base resin/curing agent in the one-component paint include a carboxyl group-containing resin/epoxy group-containing resin, a hydroxyl group-containing resin/blocked polyisocyanate compound, and a hydroxyl group-containing resin/melamine resin.

The clear paint (Z) may further contain as necessary a solvent, such as water or an organic solvent, or an additive, such as a curing catalyst, a defoamer, or an ultraviolet absorber.

The clear paint (Z) can be appropriately blended with a color pigment in a range that does not impair the transparency. Examples of the color pigment that can be blended include one type or a combination of two or more types of pigments known in the art as a pigment for ink or paint. An amount of the color pigment added may be appropriately determined but is 30 parts by mass or less and preferably from 0.01 to 10 parts by mass per 100 parts by mass of a vehicle-forming resin composition in the clear paint.

A form of the clear paint (Z) is not particularly limited, but the clear paint (Z) is usually used in the form of an organic solvent type coating composition. Examples of the organic solvent used in this case include various organic solvents for coatings, such as aromatic or aliphatic hydrocarbon-based solvents, ester-based solvents, ketone-based solvents, and ether-based solvents. For an organic solvent used, the organic solvent used for preparing a hydroxyl group-containing resin or the like may be used as is or may be further added as appropriate.

A solid concentration of the clear paint (Z) is preferably approximately from 30 to 70 mass% and more preferably in a range of approximately 40 to 60 mass%.

The clear paint (Z) is applied onto the effect coating film. The clear paint (Z) can be applied in the same manner as the colored paint (X) without any particular limitation and can be applied by a coating method, such as, for example, air spraying, airless spraying, rotary atomization coating, or curtain coating. In these coating methods, an electrostatic voltage may be applied as necessary. Among these, rotary atomization coating by electrostatic application is preferred. An applied amount of the clear paint (Z) is typically an amount resulting in a cured film thickness of preferably approximately 10 to 50 μm.

In addition, when the clear paint (Z) is applied, the viscosity of the clear paint (Z) is preferably adjusted appropriately using a solvent, such as an organic solvent, to a viscosity range suitable for the coating method. For example, in rotary atomization coating by electrostatic application, the viscosity is preferably adjusted to a range of approximately 15 to 60 seconds as measured with a Ford Cup No. 4 viscometer at 20°C.

The method for forming a multilayer coating film according to an embodiment of the present invention includes heating the colored coating film, the effect coating film, and the clear coating film separately or simultaneously to cure the coatings.

The colored coating film, the effect coating film, and the clear coating film are preferably heat-cured simultaneously from the viewpoint of shortening the process.

When the multilayer coating film contains a base coating film, preferably, the heat-curing is performed after the colored coating film is formed, and then three layers of the base coating film, effect coating film, and clear coating film are simultaneously heat-cured, from the viewpoint of forming a multilayer coating film with excellent metallic or pearly luster and shortening the process.

The heating can be performed by a known means, and for example, a drying furnace, such as a hot air furnace, an electric furnace, or an infrared induction heating furnace, can be applied. The heating temperature is suitably in a range of 70 to 150°C and preferably 80 to 140°C. The heating time is not particularly limited but is in a range of preferably 10 to 40 minutes and more preferably 20 to 30 minutes.

In addition, the present invention can employ the following configurations.

Item 1. An effect pigment dispersion containing a wetting agent (A), a flake-effect pigment (B), a sulfonic acid-modified cellulose nanofiber (C), and water (D), the effect pigment dispersion containing a solid content of 0.1 to 10 parts by mass per 100 parts by mass of a total of all components of the effect pigment dispersion.

Item 2. The effect pigment dispersion according to item 1, wherein a content of the wetting agent (A) is in a range of 2 to 30 parts by mass per 100 parts by mass of the solid content in the effect pigment dispersion.

Item 3. The effect pigment dispersion according to item 1, in which the content of the wetting agent (A) is in a range of 2.5 to 25 parts by mass and preferably in a range of 3 to 20 parts by mass based on 100 parts by mass of solid content in the effect pigment dispersion.

Item 4. The effect pigment dispersion according to any one of items 1 to 3, in which the wetting agent (A) is an acetylenediol-based wetting agent, a wetting agent having an ethylene oxide chain, or both.

Item 5. The effect pigment dispersion according to any one of items 1 to 4, in which the wetting agent (A) is an ethylene oxide adduct of acetylene diol.

Item 6. The effect pigment dispersion according to any one of items 1 to 5, in which a content of the flake-effect pigment (B) is in a range of 5 to 85 parts by mass based on 100 parts by mass of solid content in the effect pigment dispersion.

Item 7. The effect pigment dispersion according to any one of items 1 to 5, in which the content of the flake-effect pigment (B) is in a range of 15 to 80 parts by mass and preferably in a range of 30 to 75 parts by mass based on 100 parts by mass of solid content in the effect pigment dispersion.

Item 8. The effect pigment dispersion according to any one of items 1 to 7, in which the flake-effect pigment (B) is one or two or more types selected from the group consisting of vapor-deposited metal flake pigments, aluminum flake pigments, and light interference pigments.

Item 9. The effect pigment dispersion according to item 8, in which the flake-effect pigment (B) contains a vapor-deposited metal flake pigment, and the vapor-deposited metal flake pigment is a vapor-deposited aluminum flake pigment or a vapor-deposited chromium flake pigment.

Item 10. The effect pigment dispersion according to item 8, in which the flake-effect pigment (B) contains a light interference pigment, and the light interference pigment contains a metal oxide-coated mica pigment, a metal oxide-coated alumina flake pigment, or a metal oxide-coated glass flake pigment, a metal oxide-coated silica flake pigment.

Item 11. The effect pigment dispersion according to any one of items 1 to 10, in which a content of the sulfonic acid-modified cellulose nanofiber (C) is in a range of 2 to 60 parts by mass based on 100 parts by mass of solid content in the effect pigment dispersion.

Item 12. The effect pigment dispersion according to any one of items 1 to 10, in which the content of the sulfonic acid-modified cellulose nanofiber (C) is in a range of 3 to 50 parts by mass and preferably in a range of 5 to 45 parts by mass based on 100 parts by mass of solid content in the effect pigment dispersion.

Item 13. The effect pigment dispersion according to any one of items 1 to 12, in which a sulfur content in the sulfonic acid-modified cellulose nanofiber (C) is in a range of 0.42 mmol/g to 3.0 mmol/g.

Items 14. The effect pigment dispersion according to any one of items 1 to 13, in which a content of the water (D) is in a range of 50 to 95 parts by mass per 100 parts by mass of a total of all components of the effect pigment dispersion.

Items 15. The effect pigment dispersion according to any one of items 1 to 13, in which the content of the water (D) is in a range of 60 to 90 parts by mass and preferably in a range of 75 to 90 parts by mass per 100 parts by mass of a total of all components of the effect pigment dispersion.

Item 16. The effect pigment dispersion according to any one of items 1 to 15, further containing an aqueous resin dispersion (E).

Item 17. The effect pigment dispersion according to item 16, in which the aqueous resin dispersion (E) contains at least one type selected from the group consisting of aqueous urethane resin dispersions, aqueous acrylic resin dispersions, aqueous polyester resin dispersions, aqueous olefin resin dispersions, and composites of these resins.

Items 18. The effect pigment dispersion according to item 16 or 17, in which a content of the aqueous resin dispersion (E) is in a range of 1 to 60 parts by mass and preferably in a range of 5 to 40 parts by mass per 100 parts by mass of a total of all components of the effect pigment dispersion.

Item 19. A method for forming a multilayer coating film, the method including:

(1) applying a colored paint (X) onto an object to be coated to form a colored coating film;
(2) applying the effect pigment dispersion described in any one of items 1 to 18 onto the colored coating film to form an effect coating film;
(3) applying a clear paint (Z) onto the effect coating film to form a clear coating film; and
(4) heating the colored coating film formed in step (1), the effect coating film formed in step (2), and the clear coating film formed in step (3) separately or simultaneously to cure the coating films.

Item 20. The method for forming a multilayer coating film according to item 19, in which a film thickness of the effect coating film is in a range of 0.025 to 5 $\mu$m.

Item 21. The method for forming a multilayer coating film according to item 19 or 20, in which a film thickness of the effect coating film is in a range of 0.15 to 3 $\mu$m ,

Item 22. The method for forming a multilayer coating film according to any one of items 19 to 21, the method further including applying a base paint (W) that may be transparent onto the colored coating film to form a base coating film between steps (1) and (2), in which
in step (2), the effect pigment dispersion is applied onto the base coating film to form an effect coating film.

Examples

The present invention will be described more specifically below with reference to examples and comparative examples. However, the present invention is not limited to these examples only. Both "parts" and "%" are based on mass.

1. Production of object to be coated

On a steel sheet (JIS G 3141, a size of 400 mm x 300 mm x 0.8 mm), which had been degreased and zinc phosphate-treated, a cationic electrodeposition paint "Electron GT-10" (trade name: available from Kansai Paint Co., Ltd., a paint in which a block polyisocyanate compound is used as a curing agent for an epoxy resin polyamine-based cation resin) was coated by electrodeposition to give a thickness of 20 $\mu$m for a cured coating film, and the paint was cross-linked and cured by heating at 170°C for 20 minutes to form an electrodeposition coating film. Thus, the object to be coated was obtained.

2. Production of paint

Production of hydroxyl group-containing acrylic resin (R-1)

Production Example 1

To a reaction vessel equipped with a thermometer, a thermostat, a stirring device, a reflux condenser, a nitrogen inlet tube, and a dripping device, 35 parts of propylene glycol monopropyl ether were charged, and the temperature was raised to 85°C. To the reaction vessel, a mixture of 32 parts of methyl methacrylate, 27.7 parts of n-butyl acrylate, 20 parts of 2-ethylhexyl acrylate, 10 parts of 4-hydroxybutyl acrylate, 3 parts of hydroxypropyl acrylate, 6.3 parts of acrylic acid, 1 part of 2-acryloyloxyethyl acid phosphate, 15 parts of propylene glycol monopropyl ether, and 2.3 parts of 2,2'-azobis(2,4-dimethylvaleronitrile) was added dropwise over 4 hours. After completion of the dropwise addition, the mixture was aged for 1 hour. A mixture of 10 parts of propylene glycol monopropyl ether and 1 part of 2,2'-azobis(2,4-dimethylvaleronitrile) was then further added dropwise over 1 hour, and after completion of the dropwise addition, the mixture was aged for 1 hour. Then, 7.4 parts of diethanolamine was added, and a hydroxyl group-containing acrylic resin (R-1) solution with a solid content of 55% was obtained. The resulting hydroxyl group-containing acrylic resin (R-1) had an acid value of 51 mg KOH/g and a hydroxyl value of 52 mg KOH/g.

Production of aqueous acrylic resin dispersion (E-1)

Production Example 2

To a reaction vessel equipped with a thermometer, a thermostat, a stirring device, a reflux condenser, and a dripping device, 70.7 parts of deionized water and 0.52 parts of "AQUALON KH-10" (trade name, available from DKS Co. Ltd., an emulsifier, active ingredient 97%) were charged, and mixed by stirring in a nitrogen stream, and the temperature was raised to 80°C. Then, 1% of a total amount of a monomer emulsion described below and 5 parts of a 6% ammonium persulfate aqueous solution were introduced into the reaction vessel, and the reaction vessel was maintained at 80°C for 15 minutes. The remaining monomer emulsion was then added dropwise over 3 hours into the reaction vessel maintained at the same temperature. After completion of the dropwise addition, the mixture was aged for 1 hour, then while 40 parts of a 5% 2-(dimethylamino)ethanol aqueous solution was gradually added to the reaction vessel, the mixture was cooled to 30°C. The mixture was discharged while the mixture was filtered with a 100-mesh nylon cloth, and an aqueous acrylic resin dispersion (E-1) having a solid concentration of 45% was obtained. The resulting aqueous acrylic resin dispersion (E-1) had a hydroxyl value of 43 mg KOH/g and an acid value of 12 mg KOH/g.
Monomer emulsion: A monomer emulsion was obtained by mixing and stirring 50 parts of deionized water, 10 parts of styrene, 40 parts of methyl methacrylate, 35 parts of ethyl acrylate, 3.5 parts of n-butyl methacrylate, 10 parts of 2-hydroxyethyl methacrylate, 1.5 parts of acrylic acid, 1.0 parts of "AQUALON KH-10", and 0.03 parts of ammonium persulfate.

Production of aqueous acrylic resin dispersion (E-2)

Production Example 3

To a reaction vessel equipped with a thermometer, a thermostat, a stirring device, a reflux condenser, and a dripping device, 130 parts of deionized water and 0.52 parts of "AQUALON KH-10" were charged, and mixed by stirring in a nitrogen stream, and the temperature was raised to 80°C. Then, 1% of a total amount of a monomer emulsion (1) described below and 5.3 parts of a 6% ammonium persulfate aqueous solution were introduced into the reaction vessel, and the reaction vessel was maintained at 80°C for 15 minutes. The remaining monomer emulsion (1) was added dropwise over 3 hours into the reaction vessel maintained at the same temperature. After completion of the dropwise addition, the mixture was aged for 1 hour. A monomer emulsion (2) described below was then added dropwise over 1 hour, and the mixture was aged for 1 hour. Then, while 40 parts of a 5% dimethylethanolamine aqueous solution was gradually added to the reaction vessel, the mixture was cooled to 30°C. The mixture was discharged while the mixture was filtered with a 100-mesh nylon cloth, and an aqueous acrylic resin dispersion (E-2) having a solid concentration of 30% was obtained. The resulting aqueous acrylic resin dispersion (E-2) had a hydroxyl value of 25 mg KOH/g and an acid value of 33 mg KOH/g.
Monomer emulsion (1): A monomer emulsion (1) was obtained by mixing and stirring 42 parts of deionized water, 0.72 parts of "AQUALON KH-10", 2.1 parts of methylenebisacrylamide, 2.8 parts of styrene, 16.1 parts of methyl methacrylate, 28 parts of ethyl acrylate, and 21 parts of n-butyl acrylate.

Monomer emulsion (2): A monomer emulsion (2) was obtained by mixing and stirring 18 parts of deionized water, 0.31 parts of "AQUALON KH-10", 0.03 parts of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate, and 9 parts of n-butyl acrylate.

Production of hydroxyl group-containing polyester resin (R-2)

Production Example 4

To a reaction vessel equipped with a thermometer, a thermostat, a stirring device, a reflux condenser, and a water separator, 174 parts of trimethylolpropane, 327 parts of neopentyl glycol, 352 parts of adipic acid, 109 parts of isophthalic acid, and 101 parts of 1,2-cyclohexanedicarboxylic anhydride were charged, and the temperature was raised from 160°C to 230°C over 3 hours. Then, while produced condensed water was distilled off with the water separator, the temperature was maintained at 230°C, and the mixture was reacted until the acid value reached 3 mg KOH/g or less. To this reaction product, 59 parts of trimellitic anhydride was added, and addition reaction was performed at 170°C for 30 minutes. Then, the mixture was cooled to 50°C or lower, and 2-(dimethylamino)ethanol was added in an amount equivalent to the acid groups to neutralize the mixture. Then, deionized water was gradually added, and a hydroxyl group-containing polyester resin (R-2) solution having a solid concentration of 45% and a pH of 7.2 was obtained. The resulting hydroxyl group-containing polyester resin (R-2) had a hydroxyl value of 128 mg KOH/g, an acid value of 35 mg KOH/g, and a weight average molecular weight of 13000.

Production of hydroxyl group-containing polyester resin (R-3)

Production Example 5

To a reaction vessel equipped with a thermometer, a thermostat, a stirring device, a reflux condenser, and a water separator, 109 parts of trimethylolpropane, 141 parts of 1,6-hexanediol, 126 parts of 1,2-cyclohexanedicarboxylic anhydride, and 120 parts of adipic acid were charged. The temperature was raised from 160°C to 230°C over 3 hours, and then condensation reaction was performed at 230°C for 4 hours. Then, to introduce carboxyl groups to the resulting condensation reaction product, 38.3 parts of trimellitic anhydride was added and reacted at 170°C for 30 minutes. Then, the mixture was diluted with 2-ethyl-1-hexanol, and a hydroxyl group-containing polyester resin (R-3) solution having a solid content of 70% was obtained. The resulting hydroxyl group-containing polyester resin (R-3) had an acid value of 46 mg KOH/g, a hydroxyl value of 150 mg KOH/g, and a number average molecular weight of 1400.

Production of extender pigment dispersion liquid (P-1)

Production Example 6

10.6 parts (a solid content of 5.8 parts) of the hydroxyl group-containing acrylic resin (R-1) obtained in Production Example 1, 11.6 parts of deionized water, 0.2 parts (a solid content of 0.1 parts) of "Surfynol 104A" (trade name, a defoamer available from Evonik Industries AG, a solid content of 50%), and 8.1 parts (a solid content of 8.1 parts) of "BAR1FINE BF-20" (trade name, Sakai Chemical Industry Co., Ltd., barium sulfate powder, an average particle size of 0.03 $\mu$m) were mixed. The resulting mixed solution was then placed in a wide-mouth glass bottle, glass beads with a diameter of about 1.3 mm $\varphi$ were added as a dispersion media, and the wide-mouth glass bottle was sealed. The content was dispersed with a paint shaker for 1 hour, and an extender pigment dispersion liquid (P-1) was obtained.

Production of white pigment dispersion liquid (P-2)

Production Example 7

56 parts (a solid content of 25 parts) of the hydroxyl group-containing polyester resin (R-2) solution obtained in Production Example 4, 100 parts of "JR-806" (trade name, available from Tayca Corporation, rutile-type titanium dioxide), 0.03 parts of "Carbon MA-100" (trade name, available from Mitsubishi Chemical Corporation, carbon black), 15 parts of "BARIACE B-35" (trade name, available from Sakai Chemical Industry Co., Ltd., barium sulfate powder), 3 parts of "MICRO ACE S-3" (trade name, available from Nippon Talc Co., Ltd., talc powder), and 5 parts of deionized water were mixed, and the pH was adjusted to 8.0 with 2-(dimethylamino)ethanol. The resulting mixed solution was then placed in a wide-mouth glass bottle, glass beads with a diameter of about 1.3 mm φ were added as a dispersion media, and the wide-mouth glass bottle was sealed. The content was dispersed with a paint shaker for 30 minutes, and a white pigment dispersion liquid (P-2) was obtained.

Production of transparent base paint (W-1)

Production Example 8

To a stirring and mixing vessel, 30.5 parts of the extender pigment dispersion liquid (P-1) obtained in Production Example 6, 133.3 parts (a solid content of 40 parts) of the aqueous acrylic resin dispersion (E-2) obtained in Production Example 3, 32.9 parts (a solid content of 23 parts) of the hydroxyl group-containing polyester resin (R-3) solution obtained in Production Example 5, 25 parts (a solid content of 10 parts) of "UCOAT UX-310" (trade name, available from Sanyo Kasei Co., Ltd., an aqueous urethan resin dispersion, a solid content of 40%), and 33.4 parts (a solid content of 27 parts) of "Cymel 251" (trade name, available from Nihon Cytec Industries Inc., a melamine resin, a solid content of 80%) were charged, mixed and stirred, to prepare a transparent base paint (W-1).

Production of white base paint (W-2)

Production Example 9

179.03 parts of the white pigment dispersion liquid (P-2) obtained in Production Example 7, 44.4 parts (a solid content of 20 parts) of the aqueous acrylic resin dispersion (E-1) obtained in Production Example 2, 78 parts (a solid content of 30 parts) of "Bayhydur VPLS2310" (trade name, available from Sumika Bayer Urethane Co., Ltd., a blocked polyisocyanate compound, a solid content of 38%), and 72 parts (a solid content of 25 parts) of "UCOAT UX-8100" (trade name, available from Sanyo Chemical Industries, Ltd., a urethane emulsion, a solid content of 35%) were mixed and stirred to prepare a white base paint (W-2).

Production of effect pigment dispersion

Example 1

An effect pigment dispersion (Y-1) was adjusted as follows. To a stirring and mixing vessel, 24.6 parts of distilled water, 0.3 parts (a solid content of 0.3 parts) of "Dynol-604" (trade name, available from Evonik Industries AG, an acetylene diol-based surface conditioner, a solid content of 100%), 12.1 parts (a solid content of 1.2 parts) of "Hydroshine WS-3001" (trade name, a vapor-deposited aluminum flake pigment for water-borne coatings, available from ECKART GmbH, solid content: 10%, internal solvent: isopropanol, average particle size D50: 13 μm, thickness: 0.05 μm, the surface is treated with silica), 51.0 parts (a solid content of 0.5 parts) of sulfonic acid-modified cellulose nanofiber dispersion liquid (C-1) (an aqueous dispersion liquid with a sulfur content of 0.97 mmol/g, a degree of polymerization of 404, an average fiber width of 20 nm or less, and a solid content of 1%), 2.4 parts (a solid content of 0.7 parts) of the aqueous acrylic resin dispersion (E-2) obtained in Production Example 3, 0.3 parts (a solid content of 0.1 parts) of "TINUVIN 479-DW (N)" (trade name, available from BASF, an ultraviolet absorber, a solid content of 40%), 0.2 parts (a solid content of 0.1 parts) of "TINUVIN 123-DW (N)" (trade name, available from BASF, a light stabilizer, a solid content of 50%), 0.5 parts of 2-ethylhexanol, and 8.5 parts of isopropyl alcohol were charged and mixed and stirred. The resulting effect pigment dispersion (Y-1) had a solid content of 2.9% and a paint viscosity "B6 value" of 860 mPa·s.

Examples 2 to 8 and Comparative Examples 1 to 6

The effect pigment dispersions (Y-2) to (Y-14) were obtained all in the same manner as in Example 1 except for formulations described in Table 1.

[Table 1]

Table 1. Numerical values in parentheses indicate solid content

| Production Example No. | | | Example | | | |
|---|---|---|---|---|---|---|
| | | | 1 | 2 | 3 | 4 |
| Name of effect base paint (Y) | | | Y-1 | Y-2 | Y-3 | Y-4 |
| Formulation | Distilled water | | 24.6 | 24.6 | 25.9 | 25.9 |
| | Wetting agent (A) | "Dynol-604" | 0.3 (0.3) | 0.3 (0.3) | 0.3 (0.3) | 0.3 (0.3) |
| | Flake-effect pigment (B) | "Hydroshine WS-3001" | 12.1 (1.2) | 12.1 (1.2) | | |
| | | "Alpaste EMR-B6360" (*1) | | | 7.5 (3.6) | 7.5 (3.6) |
| | | "Xirallic T61-10 MicroSilver" (*2) | | | | |
| | | "Xirallic T60-10 CrystalSilver" (*3) | | | | |
| | Sulfonic acid-modified cellulose nanofiber (C) | Sulfonic acid-modified cellulose nanofiber dispersion liquid (C-1) | 51.0 (0.5) | | 53.7 (0.5) | |
| | | Sulfonic acid-modified cellulose nanofiber dispersion liquid (C-2) (*4) | | 51.0 (0.5) | | 53.7 (0.5) |
| | Viscosity modifier other than sulfonic acid-modified cellulose nanofiber (C) | "Primal ASE-60" (*5) | | | | |
| | | "Rheocrysta" (*6) | | | | |
| | | Phosphate group-containing cellulose nanofiber dispersion liquid (*7) | | | | |
| | Aqueous resin dispersion (E) | Aqueous acrylic resin dispersion (E-2) | 2.4 (0.7) | 2.4 (0.7) | 2.6 (0.7) | 2.6 (0.7) |
| | Ultraviolet absorber | "TINUVIN 479-DW (N)" | 0.3 (0.1) | 0.3 (0.1) | 0.4 (0.1) | 0.4 (0.1) |
| | Light stabilizer | "TINUVIN 123-DW (N)" | 0.2 (0.1) | 0.2 (0.1) | 0.2 (0.1) | 0.2 (0.1) |
| | Solvent | 2-Ethylhexanol | 0.5 | 0.5 | 0.5 | 0.5 |
| | | Isopropyl alcohol | 8.5 | 8.5 | 8.9 | 8.9 |
| Properties | Solid content (%) | | 2.9 | 2.9 | 5.4 | 5.4 |
| | Paint viscosity "B6 value" (mPa·s) | | 860 | 760 | 890 | 790 |
| | Content of wetting agent (A) based on 100 parts by mass of solid content in effect pigment dispersion | | 8.8 | 8.8 | 5.0 | 5.0 |
| | Content of flake-effect pigment (B) based on 100 parts by mass of solid content in effect pigment dispersion | | 41.6 | 41.6 | 66.7 | 66.7 |
| | Content of sulfonic acid-modified cellulose nanofiber (C) based on 100 parts by mass of solid content in effect pigment dispersion | | 17.5 | 17.5 | 10.0 | 10.0 |
| | Content of water (D) per 100 parts by mass of total of all components of effect pigment dispersion | | 77.1 | 77.1 | 81.3 | 81.3 |
| | Viscosity stability of paint | | B | A | B | A |

[Table 2]

| Table 1 (cont.-1) Numerical values in parentheses indicate solid content | | | | Example | | | |
|---|---|---|---|---|---|---|---|
| Production Example No. | | | | 5 | 6 | 7 | 8 |
| Name of effect base paint (Y) | | | | Y-5 | Y-6 | Y-7 | Y-8 |
| Formulation | Distilled water | | | 24.3 | 24.3 | | 49.3 |
| | Wetting agent (A) | "Dynol-604" | | 0.3 (0.3) | 0.3 (0.3) | 0.4 (0.4) | 0.3 (0.3) |
| | Flake-effect pigment (B) | "Hydroshine WS-3001" | | | | | 12.1 (1.2) |
| | | "Alpaste EMR-B6360" (*1) | | | | | |
| | | "Xirallic T61-10 MicroSilver" (*2) | | 2.7 (2.7) | | 0.2 (0.2) | |
| | | "Xirallic T60-10 CrystalSilver" (*3) | | | 2.7 (2.7) | | |
| | Sulfonic acid-modified cellulose nanofiber (C) | Sulfonic acid-modified cellulose nanofiber dispersion liquid (C-1) | | | | | |
| | | Sulfonic acid-modified cellulose nanofiber dispersion liquid (C-2) (*4) | | 58.8 (0.6) | 58.8 (0.6) | 80.4 (0.8) | 25.5 (0.3) |
| | Viscosity modifier other than sulfonic acid-modified cellulose nanofiber (C) | "Primal ASE-60" (*5) | | | | | 0.9 (0.3) |
| | | "Rheocrysta" (*6) | | | | | |
| | | Phosphate group-containing cellulose nanofiber dispersion liquid (*7) | | | | | |
| | Aqueous resin dispersion (E) | Aqueous acrylic resin dispersion (E-2) | | 2.8 (0.8) | 2.8 (0.8) | 3.9 (1.1) | 2.4 (0.7) |
| | Ultraviolet absorber | "TINUVIN 479-DW (N)" | | 0.4 (0.2) | 0.4 (0.2) | 0.5 (0.2) | 0.3 (0.1) |
| | Light stabilizer | "TINUVIN 123-DW (N)" | | 0.3 (0.1) | 0.3 (0.1) | 0.4 (0.2) | 0.2 (0.1) |
| | Solvent | 2-Ethylhexanol | | 0.6 | 0.6 | 0.8 | 0.5 |
| | | Isopropyl alcohol | | 9.8 | 9.8 | 13.4 | 8.5 |
| Properties | Solid content (%) | | | 4.7 | 4.7 | 2.9 | 2.9 |
| | Paint viscosity "B6 value" (mPa·s) | | | 780 | 780 | 760 | 760 |
| | Content of wetting agent (A) based on 100 parts by mass of solid content in effect pigment dispersion | | | 6.3 | 6.3 | 13.9 | 8.8 |
| | Content of flake-effect pigment (B) based on 100 parts by mass of solid content in effect pigment dispersion | | | 58.3 | 58.3 | 7.5 | 41.6 |
| | Content of sulfonic acid-modified cellulose nanofiber (C) based on 100 parts by mass of solid content in effect pigment dispersion | | | 12.5 | 12.5 | 27.8 | 8.8 |
| | Content of water (D) per 100 parts by mass of total of all components of effect pigment dispersion | | | 84.9 | 84.9 | 82.9 | 77.2 |

(continued)

| Table 1 (cont.-1) Numerical values in parentheses indicate solid content | Example | | | |
|---|---|---|---|---|
| Production Example No. | 5 | 6 | 7 | 8 |
| Name of effect base paint (Y) | Y-5 | Y-6 | Y-7 | Y-8 |
| Viscosity stability of paint | A | A | A | A |

[Table 3]

| Table 1 (cont.-2) Numerical values in parentheses indicate solid content | | | Comparative Example | | | |
|---|---|---|---|---|---|---|
| Production Example No. | | | 1 | 2 | 3 | 4 |
| Name of effect base paint (Y) | | | Y-9 | Y-10 | Y-11 | Y-12 |
| Formulation | Distilled water | | 50.1 | 52.8 | 51.4 | 54.1 |
| | Wetting agent (A) | "Dynol-604" | 0.3 (0.3) | 0.3 (0.3) | 0.3 (0.3) | 0.3 (0.3) |
| | Flake-effect pigment (B) | "Hydroshine WS-3001" | 12.1 (1.2) | | 12.1 (1.2) | |
| | | "Alpaste EMR-B6360" (*1) | | 7.5 (3.6) | | 7.5 (3.6) |
| | | "Xirallic T61-10 MicroSilver" (*2) | | | | |
| | | "Xirallic T60-10 CrystalSilver" (*3) | | | | |
| | Sulfonic acid-modified cellulose nanofiber (C) | Sulfonic acid-modified cellulose nanofiber dispersion liquid (C-1) | | | | |
| | | Sulfonic acid-modified cellulose nanofiber dispersion liquid (C-2) (*4) | | | | |
| | Viscosity modifier other than sulfonic acid-modified cellulose nanofiber (C) | "Primal ASE-60" (*5) | | | | |
| | | "Rheocrysta" (*6) | 25.5 (0.5) | 26.8 (0.5) | | |
| | | Phosphate group-containing cellulose nanofiber dispersion liquid (*7) | | | 24.3 (0.5) | 25.5 (0.5) |
| | Aqueous resin dispersion (E) | Aqueous acrylic resin dispersion (E-2) | 2.5 (0.7) | 2.6 (0.7) | 2.4 (0.7) | 2.6 (0.7) |
| | Ultraviolet absorber | "TINUVIN 479-DW (N)" | 0.3 (0.1) | 0.4 (0.1) | 0.3 (0.1) | 0.4 (0.1) |
| | Light stabilizer | "TINUVIN 123-DW (N)" | 0.2 (0.1) | 0.2 (0.1) | 0.2 (0.1) | 0.2 (0.1) |
| | Solvent | 2-Ethylhexanol | 0.5 | 0.5 | 0.5 | 0.5 |
| | | Isopropyl alcohol | 8.5 | 8.9 | 8.5 | 8.9 |

(continued)

| Table 1 (cont.-2) Numerical values in parentheses indicate solid content | | | Comparative Example | | | |
|---|---|---|---|---|---|---|
| Production Example No. | | | 1 | 2 | 3 | 4 |
| Name of effect base paint (Y) | | | Y-9 | Y-10 | Y-11 | Y-12 |
| Properties | Solid content (%) | | 2.9 | 5.4 | 2.9 | 5.4 |
| | Paint viscosity "B6 value" (mPa·s) | | 2200 | 2350 | 760 | 760 |
| | Content of wetting agent (A) based on 100 parts by mass of solid content in effect pigment dispersion | | 8.8 | 5.0 | 8.8 | 5.0 |
| | Content of flake-effect pigment (B) based on 100 parts by mass of solid content in effect pigment dispersion | | 41.6 | 66.7 | 41.6 | 66.7 |
| | Content of sulfonic acid-modified cellulose nanofiber (C) based on 100 parts by mass of solid content in effect pigment dispersion | | 0 | 0 | 0 | 0 |
| | Content of water (D) per 100 parts by mass of total of all components of effect pigment dispersion | | 77.2 | 81.3 | 77.2 | 81.3 |
| Viscosity stability of paint | | | E | E | C | C |

[Table 4]

| Table 1 (cont.-3) Numerical values in parentheses indicate solid content | | | | | |
|---|---|---|---|---|---|
| Production Example No. | | | Comparative Example | | |
| | | | 5 | 6 | 7 |
| Name of effect base paint (Y) | | | Y-13 | Y-14 | Y-15 |
| Formulation | Distilled water | | 53.7 | 53.7 | "WBC-713T No. 1F7" |
| | Wetting agent (A) | "Dynol-604" | 0.3 (0.3) | 0.3 (0.3) | |
| | Flake-effect pigment (B) | "Hydroshine WS-3001" | | 2.3 (2.3) | |
| | | "Alpaste EMR-B6360" (*1) | | | |
| | | "Xirallic T61-10 MicroSilver" (*2) | 2.7 (2.7) | | |
| | | "Xirallic T60-10 CrystalSilver" (*3) | | 2.7 (2.7) | |
| | Sulfonic acid-modified cellulose nanofiber (C) | Sulfonic acid-modified cellulose nanofiber dispersion liquid (C-1) | | | |
| | | Sulfonic acid-modified cellulose nanofiber dispersion liquid (C-2) (*4) | | | |
| | Viscosity modifier other than sulfonic acid-modified cellulose nanofiber (C) | "Primal ASE-60" (*5) | | | |
| | | "Rheocrysta" (*6) | 29.4 (0.6) | 29.4 (0.6) | |
| | | Phosphate group-containing cellulose nanofiber dispersion liquid (*7) | | | |
| | Aqueous resin dispersion (E) | Aqueous acrylic resin dispersion (E-2) | 2.8 (0.8) | 2.8 (0.8) | |
| | Ultraviolet absorber | "TINUVIN 479-DW (N)" | 0.4 (0.2) | 0.4 (0.2) | |
| | Light stabilizer | "TINUVIN 123-DW (N)" | 0.3 (0.1) | 0.3 (0.1) | |
| | Solvent | 2-Ethylhexanol | 0.6 | 0.6 | |
| | | Isopropyl alcohol | 9.8 | 9.8 | |
| Properties | Solid content (%) | | 4.7 | 4.7 | 23.0 |
| | Paint viscosity "B6 value" (mPa·s) | | 2300 | 2300 | |
| | Content of wetting agent (A) based on 100 parts by mass of solid content in effect pigment dispersion | | 6.3 | 6.3 | |
| | Content of flake-effect pigment (B) based on 100 parts by mass of solid content in effect pigment dispersion | | 58.3 | 58.3 | |
| | Content of sulfonic acid-modified cellulose nanofiber (C) based on 100 parts by mass of solid content in effect pigment dispersion | | 0 | 0 | |
| | Content of water (D) per 100 parts by mass of total of all components of effect pigment dispersion | | 84.9 | 84.9 | |

(continued)

| Table 1 (cont.-3) Numerical values in parentheses indicate solid content | | | |
|---|---|---|---|
| Production Example No. | Comparative Example | | |
| | 5 | 6 | 7 |
| Name of effect base paint (Y) | Y-13 | Y-14 | Y-15 |
| Viscosity stability of paint | E | E | A |

(*1) "Alpaste EMR-B6360": trade name, available from Toyo Aluminium K. K., solid content 47%, non-leafing aluminum flake, average particle size D50: 10.3 $\mu$m, thickness: 0.19 $\mu$m, the surface is treated with silica, (*2) "Xirallic T61-10 Micro Silver": trade name, available from Merck Ltd., Japan, solid content 100%, a titanium oxide-coated alumina flake pigment, average particle size 11.8 $\mu$m,

(*3) "Xirallic T60-10 Crystal Silver": trade name, available from Merck Ltd., Japan, solid content 100%, a titanium oxide-coated alumina flake pigment, average particle size 18.5 $\mu$m,

(*4) a sulfonic acid-modified cellulose nanofiber dispersion liquid (C-2): an aqueous dispersion liquid having a sulfur content of 0.56 mmol/g, a degree of polymerization of 408, an average fiber width of 20 nm or less, and a solid content of 1%, (*5) "Primal ASE-60": trade name, available from Dow Chemical Co., a poly(acrylic acid)-based viscosity modifier, an aqueous dispersion liquid having a solid content of 28%, (*6) "Rheocrysta": trade name, available from DKS Co. Ltd., an aqueous dispersion liquid of a carboxylic acid-modified cellulose nanofiber having a solid content of 2%, and (*7) a phosphate group-containing cellulose nanofiber dispersion liquid: an aqueous dispersion liquid having a number average fiber diameter of 4 nm, an amount of phosphate groups introduced of 1.50 mmol/g, and a solid concentration of 2%.

Comparative Example 7

A commercially available "WBC-713T No. 1F7" (trade name, available from Kansai Paint Co., Ltd., acrylic melamine resin-based aqueous base coat paint, silver coating color, solid content 23%, a sulfonic acid-modified cellulose nanofiber is not used) was used as an effect pigment dispersion (Y-15).

Viscosity stability of paint

First, 320 g of the resulting effect pigment dispersion was prepared, 20 g of this effect pigment dispersion was allowed to stand at a temperature of 23°C for 6 hours and then measured for viscosity (viscosity before stirring) at a temperature of 23°C and a shear rate of 0.1 (s-1) by a rheometer (HAAKE RS150, available from Thermo Fisher Scientific Inc.). The remaining 300 g of the effect pigment dispersion was transferred to a 500-mL beaker, and the content of the beaker was stirred up and down to make it homogeneous and then stirred using a magnetic stirrer at a temperature of 23°C and 1000 rpm for 24 hours. The mouth of the beaker was sealed with a Parafilm to prevent water evaporation during stirring. The effect pigment dispersion that had been stirred for 24 hours was allowed to stand at a temperature of 23°C for 6 hours and then measured for viscosity (viscosity after stirring) at a temperature of 23°C and a shear rate of 0.1 (s-1) by a rheometer (HAAKE RS150, available from Thermo Fisher Scientific Inc.).

Then, the viscosity change rate (%) at a shear rate of 0.1 (s-1) was calculated by the following equation, and the viscosity stability was evaluated according to the following criteria. A score of B or higher is acceptable.

$$\text{Viscosity change rate (\%) at a shear rate of 0.1 (s-1)} = (|\text{viscosity before stirring} - \text{viscosity after stirring}|/\text{viscosity before stirring}) \times 100$$

A: Viscosity change rate is less than 30%
B: Viscosity change rate is 30% or higher and less than 40%
C: Viscosity change rate is 40% or higher and less than 60%
D: Viscosity change rate is 60% or higher and less than 70%
E: Viscosity change rate is 70% or higher.

Evaluation results are collectively shown in Table 1. The effect pigment dispersions of Examples 1 to 8 had excellent viscosity stability, whereas the effect pigment dispersions of Comparative Examples 1 to 6 containing no sulfonic acid-modified cellulose nanofiber and containing a viscosity modifier other than the sulfonic acid-modified cellulose nanofiber (C) had low viscosity stability.

The effect pigment dispersion (Y-15) of Comparative Example 7 was a commercially available product formed without using a cellulose nanofiber and had high solid content and thus had good viscosity stability of the paint.

Preparation of colored paint (X)

Colored paint (X-1): "TP-65 Dark Gray" (trade name, available from Kansai Paint Co., Ltd., an intermediate paint of a polyester resin-based solvent, L* value of the resulting coating film: 20) was used as a colored paint (X-1).

Colored paint (X-2): "TP-65" (trade name, available from Kansai Paint Co., Ltd., an intermediate paint of a polyester resin-based solvent, L* value of the resulting coating film: 85) was used as a colored paint (X-2).

Colored paint (X-3): "WP-522H" (trade name, available from Kansai Paint Co., Ltd., an intermediate paint of a polyester resin-based solvent, L* value of a coating film obtained by blending carbon black: 3)

Preparation of clear paint (Z)

Clear paint (Z-1)

"KIN46510" (Trade name: Kansai Paint Co., Ltd., a hydroxyl group/isocyanate group-curable acrylic resin-urethane resin-based two-component organic solvent-type paint) was used as a clear paint (Z-1).

Clear paint (Z-2)

A paint prepared by adding 1.21 parts of "PARIOGEN MAROON L3920" (trade name, available from BASF, an organic perylene pigment) to "KINO6510" per 100 parts by mass of resin solid content contained in "K1NO6510" was used as a clear paint (Z-2).

3. Preparation and evaluation of test sheet

Preparation of test sheet

Example 9

The colored paint (X-1) was electrostatically applied using a rotary atomization-type bell-shaped coater onto the object to be coated produced in 1 described above to give a cured film thickness of 25 $\mu$m. The paint was heated at 140°C for 30 minutes to be cross-linked and cured, and a colored coating film was formed.

The transparent base paint (W-1) prepared in Production Example 8 was then electrostatically applied using a rotary atomization-type bell-shaped coater onto the colored coating film to give a cured film thickness of 25 $\mu$m and allowed to stand for 2 minutes, and an uncured base coating film was formed.

Then, the effect pigment dispersion (Y-1) prepared in Example 1 was applied onto the uncured base coating film using a Robot Bell available from ABB under conditions of a booth temperature of 23°C and a humidity of 68% to give a dry coating film thickness of 1.0 $\mu$m. The coated object was allowed to stand for 3 minutes, then pre-heated at 80°C for 3 minutes, and an effect coating film was formed.

Then, the clear paint (Z-1) was applied onto the uncured effect coating film using a Robot Bell available from ABB under conditions of a booth temperature of 23°C and a humidity of 68% to give a dry coating film thickness of 35 $\mu$m, and a clear coating film was formed. After the application, the object was allowed to stand at room temperature for 7 minutes, then heated at 140°C for 30 minutes using an inside of a hot air circulation drying furnace to dry multilayer coating films simultaneously, and a test sheet was formed.

Here, the dry coating film thickness of the effect coating film was calculated from the following equation. The same applies to the following examples.

$$x = sc/sg/S * 10000$$

x: Film thickness [$\mu$m]

sc: Solid content [g] coated by application

sg: Specific gravity of coating film [g/cm$^3$]
S: Evaluated surface area [cm$^2$] of the solid content coated by application

Examples 10 to 14, 17 and 18, and Comparative Examples 8 to 13

Test sheets were obtained all in the same manner as in Example 1 except for paints and film thicknesses described in Table 2.

Example 15

The colored paint (X-3) was electrostatically applied using a rotary atomization-type bell-shaped coater onto the object to be coated produced in 1 described above to give a cured film thickness of 25 μm and allowed to stand for 3 minutes, and an uncured colored coating film was formed.
The effect pigment dispersion (Y-2) prepared in Example 2 was then applied onto the uncured colored coating film using a Robot Bell available from ABB under conditions of a booth temperature of 23°C and a humidity of 68% to give a dry coating film thickness of 1.0 μm. The coated object was allowed to stand for 3 minutes, then pre-heated at 80°C for 3 minutes, and an effect coating film was formed.
Then, the clear paint (Z-1) was applied onto the uncured effect coating film using a Robot Bell available from ABB under conditions of a booth temperature of 23°C and a humidity of 68% to give a dry coating film thickness of 35 μm, and a clear coating film was formed. After the application, the object was allowed to stand at room temperature for 7 minutes, then heated at 140°C for 30 minutes using an inside of a hot air circulation drying furnace to dry multilayer coating films simultaneously, and a test sheet was formed.

Example 16 and Comparative Example 14

Test sheets were obtained all in the same manner as in Example 15 except for paints and film thicknesses described in Table 2.

[Table 5]

Table 2

|  | Examples | | | | | | | | | |
| --- | --- | --- | --- | --- | --- | --- | --- | --- | --- | --- |
|  | 9 | 10 | 11 | 12 | 13 | 14 | 15 | 16 | 17 | 18 |
| Name of colored paint (X) | X-1 | X-1 | X-1 | X-1 | X-2 | X-2 | X-3 | X-3 | X-1 | X-1 |
| Name of base paint (W) | W-1 | W-1 | W-1 | W-1 | W-2 | W-2 |  |  | W-1 | W-1 |
| Name of effect pigment dispersion (Y) | Y-1 | Y-2 | Y-3 | Y-4 | Y-5 | Y-6 | Y-2 | Y-7 | Y-8 | Y-2 |
| Film thickness (μm) of effect coating film | 1.0 | 1.0 | 2.0 | 2.0 | 2.0 | 2.0 | 1.0 | 0.2 | 1.0 | 1.0 |
| Name of clear paint (Z) | Z-1 | Z-1 | Z-1 | Z-1 | Z-1 | Z-1 | Z-1 | Z-1 | Z-1 | Z-2 |
| Sparkle area Sa (75°) | 9.9 | 12 | 23 | 20 | 0.1 | 0.2 | 12 | 1.9 | 17 | 0.7 |
| 60° Specular gloss (60° gloss) | 160 | 150 | 140 | 135 | 108 | 113 | 151 | 96 | 140 | 97 |

[Table 6]

Table 2 (cont.)

|  | Comparative Example | | | | | | |
| --- | --- | --- | --- | --- | --- | --- | --- |
|  | 8 | 9 | 10 | 11 | 12 | 13 | 14 |
| Name of colored paint (X) | X-1 | X-1 | X-1 | X-1 | X-1 | X-1 | X-1 |

(continued)

| | Comparative Example | | | | | | |
|---|---|---|---|---|---|---|---|
| | 8 | 9 | 10 | 11 | 12 | 13 | 14 |
| Name of base paint (W) | W-1 | W-1 | W-1 | W-1 | W-1 | W-1 | |
| Name of effect pigment dispersion (Y) | Y-9 | Y-10 | Y-11 | Y-12 | Y-13 | Y-14 | Y-15 |
| Film thickness ($\mu$m) of effect coating film | 1.0 | 2.0 | 1.0 | 2.0 | 2.0 | 2.0 | 15 |
| Name of clear paint (Z) | Z-1 | Z-1 | Z-1 | Z-1 | Z-1 | 2-1 | Z-1 |
| Sparkle area Sa (75°) | 15 | 25 | 16 | 23 | 0.3 | 0.4 | 24 |
| 60° Specular gloss (60° gloss) | 145 | 135 | 143 | 132 | 105 | 109 | 100 |

Coating film evaluation

Each test sheet obtained as described above was evaluated for the following items.

Sparkle area Sa

Sparkle area Sa (75°): In a direction perpendicular to the planar direction of a surface to be measured, a CCD chip for imaging the surface was placed. For each example, an image was captured by the CCD chip when light was incident on the surface at an angle of 75° to the perpendicular direction. The resulting image was analyzed by an image analysis algorithm using a brightness level histogram, and the sparkle area Sa (75°) was calculated. For the measurement, a multi-angle colorimeter (available from BYK, trade name, BYK-mac i) was used. Lower values are better.

60° Specular gloss (60° gloss)

The test sheet obtained above was measured for a 60° gloss value using a gloss meter (micro-TRI-gloss, available from BYK-Gardner). Higher values are better.

The results of the coated film evaluation are shown in Table 2. The multilayer coating films of Examples 9 and 10 were superior to the multilayer coating films of Comparative Examples 8 and 10 in terms of both sparkle area Sa and 60° gloss. The multilayer coating films of Examples 11 and 12 were superior to the multilayer coating films of Comparative Examples 9 and 11 in terms of either or both of sparkle area Sa and 60° gloss. The multilayer coating film of Example 13 was superior to the multilayer coating film of Comparative Example 12 in terms of both sparkle area Sa and 60° gloss. The multilayer coating film of Example 14 was superior to the multilayer coating film of Comparative Example 13 in terms of both sparkle area Sa and 60° gloss.

The multilayer coating film of Example 15 had the same effect pigment dispersion (Y-2) as that of the multilayer coating film of Example 10 and differed from the multilayer coating film of Example 10 in the composition of the colored paint (X-3) and the absence of the base paint (W) but was satisfactory in terms of both bright area Sa and 60° gloss. For the multilayer coating film of Example 16, the effect pigment dispersion (Y-7) had a similar composition to the composition of the effect pigment dispersion (Y-5) of Example 13. The multilayer coating film of Example 16 was satisfactory in terms of both sparkle area Sa and 60° gloss. The multilayer coating film of Example 17 differed from the multilayer coating films of Examples 1 and 2 in that the effect pigment dispersion (Y-8) contained Primal ASE-60, a poly(acrylic acid)-based viscosity modifier, as the viscosity modifier, in addition to the sulfonic acid-modified cellulose nanofiber. The multilayer coating film of Example 17 was satisfactory, but slightly inferior to the multilayer coating films of Examples 1 and 2, in terms of sparkle area Sa and good 60° gloss. The multilayer coating film of Example 18 differed from the multilayer coating film of Example 10 in having the clear paint (Z-2) and was superior to the multilayer coating film of Example 10 in terms of sparkle area Sa and had a lower 60° gloss value.

The multilayer coating film of Comparative Example 14 was produced using the effect pigment dispersion (Y-15) of Comparative Example 7. The multilayer coating film of Comparative Example 14 was produced with a thickness of 15 $\mu$m, which was the standard film thickness of the effect pigment dispersion (Y-15), but had a lower 60° gloss value compared with Examples 11 and 12 as well as Comparative Examples 9 and 11, which were produced using the aluminum flake pigment. The effect pigment dispersion (Y-15) had a high solid content and thus was difficult to be applied to produce a thin film.

Although embodiments and examples of the present invention have been specifically described above, the present invention is not limited to the embodiments described above, and various modifications based on the technical idea of the present invention are possible.

**Claims**

1. An effect pigment dispersion comprising a wetting agent (A), a flake-effect pigment (B), a sulfonic acid-modified cellulose nanofiber (C), and water (D),
the effect pigment dispersion containing a solid content of 0.1 to 10 parts by mass per 100 parts by mass of a total of all components of the effect pigment dispersion.

2. The effect pigment dispersion according to claim 1, wherein a content of the wetting agent (A) is in a range of 2 to 30 parts by mass per 100 parts by mass of the solid content in the effect pigment dispersion.

3. The effect pigment dispersion according to claim 1 or 2, wherein a content of the flake-effect pigment (B) is in a range of 5 to 85 parts by mass per 100 parts by mass of the solid content in the effect pigment dispersion.

4. The effect pigment dispersion according to any one of claims 1 to 3, wherein a content of the sulfonic acid-modified cellulose nanofiber (C) is in a range of 2 to 60 parts by mass per 100 parts by mass of the solid content in the effect pigment dispersion.

5. The effect pigment dispersion according to any one of claims 1 to 4, wherein a sulfur content in the sulfonic acid-modified cellulose nanofiber (C) is in a range of 0.42 mmol/g to 3.0 mmol/g.

6. The effect pigment dispersion according to any one of claims 1 to 5, wherein a content of the water (D) is in a range of 50 to 95 parts by mass per 100 parts by mass of a total of all components of the effect pigment dispersion.

7. The effect pigment dispersion according to any one of claims 1 to 6, further comprising an aqueous resin dispersion (E).

8. A method for forming a multilayer coating film, the method comprising:

(1) applying a colored paint (X) onto an object to be coated to form a colored coating film;
(2) applying the effect pigment dispersion described in any one of claims 1 to 7 onto the colored coating film to form an effect coating film;
(3) applying a clear paint (Z) onto the effect coating film to form a clear coating film; and
(4) heating the colored coating film formed in step (1), the effect coating film formed in step (2), and the clear coating film formed in step (3) separately or simultaneously to cure the coating films.

9. The method for forming a multilayer coating film according to claim 8, wherein a film thickness of the effect coating film is in a range of 0.025 to 5 $\mu$m.

## INTERNATIONAL SEARCH REPORT

International application No.

PCT/JP2021/018557

### A. CLASSIFICATION OF SUBJECT MATTER

Int. Cl. B05D5/06(2006.01)i, B05D7/24(2006.01)i, C09D5/02(2006.01)i, C08K5/00(2006.01)i, C08K7/00(2006.01)i, C08L1/02(2006.01)i, C08L101/00(2006.01)i, C09D101/02(2006.01)i, C09D201/00(2006.01)i, C09D7/47(2018.01)i, C09D7/61(2018.01)i
FI: C09D101/02, B05D7/24 303A, B05D7/24 303J, B05D7/24 303E, B05D7/24 303G, B05D7/24 302C, B05D5/06 101A, B05D5/06 101Z, C09D7/61, C09D5/02, C09D201/00, G09D7/47, C08L1/02, C08K7/00, C08K5/00, C08L101/00

According to International Patent Classification (IPC) or to both national classification and IPC

### B. FIELDS SEARCHED

Minimum documentation searched (classification system followed by classification symbols)
Int. Cl. B05D5/06, B05D7/24, C09D5/02, C08K5/00, C08K7/00, C08L1/02, C08L101/00, C09D101/02, C09D201/00, C09D7/47, C09D7/61

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/066980 A1 (KANSAI PAINT CO., LTD.) 02 April 2020 (2020-04-02), claims, examples | 1-9 |
| A | WO 2019/225629 A1 (KANSAI PAINT CO., LTD.) 28 November 2019 (2019-11-28), claims, examples | 1-9 |
| A | JP 2001-247812 A (ASAHI KASEI CORP.) 14 September 2001 (2001-09-14), paragraphs [0019], [0020] | 1-9 |
| A | JP 5-194912 A (ASAHI CHEMICAL INDUSTRY CO., LTD.) 03 August 1993 (1993-08-03), examples 1-6 | 1-9 |
| A | JP 2017-532431 A (BASF SE) 02 November 2017 (2017-11-02), examples 1-21 | 1-9 |

☒ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05.08.2021 | 17.08.2021 |

| Name and mailing address of the ISA/<br>Japan Patent Office<br>3-4-3, Kasumigaseki, Chiyoda-ku,<br>Tokyo 100-8915, Japan | Authorized officer |
| | Telephone No. |

Form PCT/ISA/210 (second sheet) (January 2015)

**INTERNATIONAL SEARCH REPORT**

| International application No. |
| --- |
| PCT/JP2021/018557 |

C (Continuation).    DOCUMENTS CONSIDERED TO BE RELEVANT

| Category* | Citation of document, with indication, where appropriate, of the relevant passages | Relevant to claim No. |
| --- | --- | --- |
| E, A | WO 2021/117662 A1 (TOYO SEIKAN GROUP HOLDINGS, LTD.) 17 June 2021 (2021-06-17), claim 1, paragraph [0032], examples 1-3 | 1-9 |
| E, A | WO 2021/095760 A1 (KANSAI PAINT CO., LTD.) 20 May 2021 (2021-05-20), claims, paragraph [0265], examples 14-16, 24 | 1-9 |

Form PCT/ISA/210 (continuation of second sheet) (January 2015)

INTERNATIONAL SEARCH REPORT

Information on patent family members

International application No.

PCT/JP2021/018557

| Patent Documents referred to in the Report | Publication Date | Patent Family | Publication Date |
|---|---|---|---|
| WO 2020/066980 A1 | 02.04.2020 | (Family: none) | |
| WO 2019/225629 A1 | 28.11.2019 | (Family: none) | |
| JP 2001-247812 A | 14.09.2001 | (Family: none) | |
| JP 5-194912 A | 03.08.1993 | US 5521292 A examples 1-6 GB 2261663 A DE 4238453 A FR 2683821 A KR 10-1993-0010056 A TW 275635 B | |
| JP 2017-532431 A | 02.11.2017 | US 2017/0166760 A1 examples 1-21 EP 3180402 A1 CA 2957846 A1 KR 10-2017-0042349 A CN 106661354 A | |
| WO 2021/117662 A1 | 17.06.2021 | (Family: none) | |
| WO 2021/095760 A1 | 20.05.2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63272544 A
- JP 2009155537 A
- WO 2017175468 A